(19) Europäisches Patentamt
European Patent Office
Office européen des brevets

(11) EP 4 230 702 A1

(12) **EUROPEAN PATENT APPLICATION**

(43) Date of publication:
**23.08.2023 Bulletin 2023/34**

(21) Application number: **22157035.1**

(22) Date of filing: **16.02.2022**

(51) International Patent Classification (IPC):
***C09C 1/42*** *(2006.01)* ***C09C 3/10*** *(2006.01)*
***C08K 3/34*** *(2006.01)* ***B32B 27/20*** *(2006.01)*

(52) Cooperative Patent Classification (CPC):
**C09C 1/42; C01B 33/40; C08K 3/346; C09C 1/28; C09C 3/10;** C01P 2004/61; C01P 2006/10; C01P 2006/12; C01P 2006/32; C01P 2006/80; C08K 2201/003; C08K 2201/006

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **IMI Fabi S.p.A.**
**20129 Milano (IT)**

(72) Inventors:
- **Mondonico, Mario**
  **20129 Milano (IT)**
- **Ercoli Malacari, Piergiovanni**
  **20129 Milano (IT)**

(74) Representative: **Fuchs Patentanwälte Partnerschaft mbB**
**Tower 185**
**Friedrich-Ebert-Anlage 35-37**
**60327 Frankfurt am Main (DE)**

# (54) TALC PARTICULATE WITH A PARTICULARLY LOW MIGRATION FACTOR FOR THE USE AS FILLERS IN FOOD CONTACT MATERIALS (FCMS)

(57) Talc particulate with specific physical properties having a particularly low migration factor when used as a filler in polymers is disclosed. Such talc particulates are of specific advantage as fillers in biopolymers, which are used as food contact materials (FCMs).

**Figure 1**

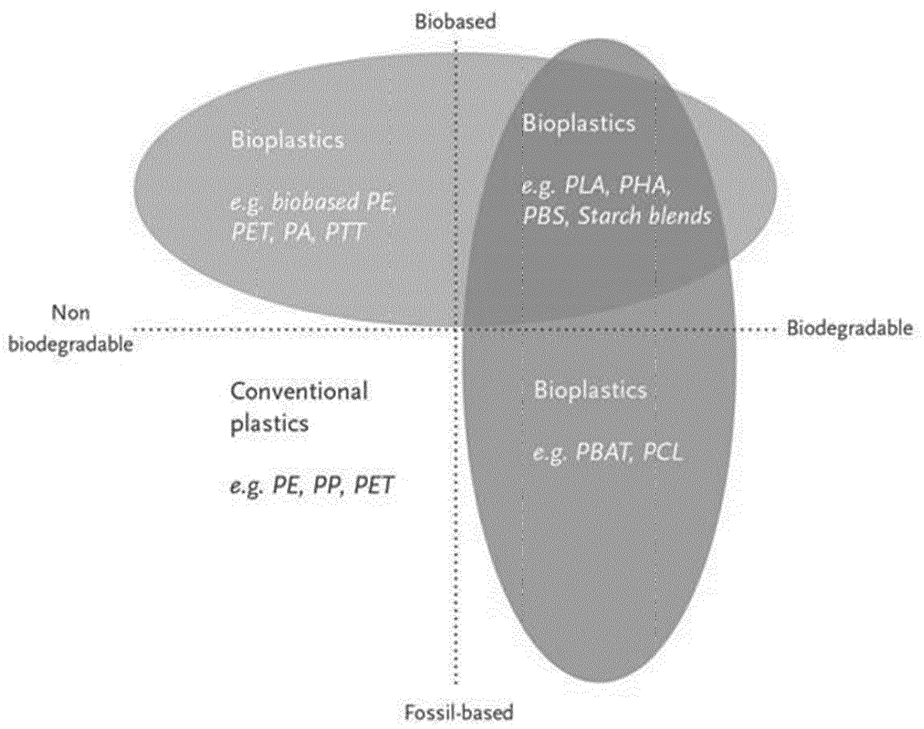


EP 4 230 702 A1

## Description

Summary

Talc particulate having a particularly low migration factor is disclosed. Such talc particulates are of specific advantage as fillers in polymers, especially biopolymers, which are used as food contact materials (FCMs).

Background of the Invention

Talc is a mineral that can be found in nature together with other minerals, forming rocks called soapstone, steatite or talc schist.

Talc is a hydrated magnesium silicate, belonging to the subclass of phyllosilicates. Its crystals are thin and of lamellar shape. Talc can be found in various grades, different by purity, colour and lamellarity. Its main characteristics are: it is naturally hydrophobic and lipophilic, it is chemically inert, resisting very well to acids and bases; it is the softest mineral; it is a good electric and thermal insulator and it is neither flammable nor explosive. Thanks to these characteristics, talc is a mineral of choice in many industrial uses.

Polymers, nowadays especially biopolymers, find for their application in both rigid and flexible disposable/compostable applications (cups, plates, shopping bags, cutlery, etc.) which often come in direct contact with food. Such polymers may comprise inorganic fillers, including talc, in order to enhance material rigidity, thermal properties and to extend the volume of the resin.

However, food contact materials (FCMs), i.e. materials or articles that come into direct contact with food and drinks, need to fulfil specific criteria in with respect to safety and (chemical) stability. FCMs should not change the nature, substance or quality of the food and must not transfer their components into the foods in unacceptable quantities (migration).

Thus, providing degradable biopolymers which at the same time fulfil FCM-criteria, is a challenging task both for the polymers itself as well as for any filler used therein.

Conventional talc particulates, for example, show a substantial migration of components into foods, especially during acidic (< pH 4.5) migration tests at elevated temperatures (70°C). Thus, great need exists to find talc particulates which show an improved migration activity, especially during acidic (< pH 4.5) migration tests at elevated temperatures (70°C).

Detailed description of the invention

It has been found by the present invention that the talc particulates described hereinunder are not very suitable as fillers in polymers, especially biopolymers, thereby improving certain physical characteristics of said polymers (e.g. stiffness, temperature stability etc.), but also show a substantially decreased migration of components into foods, especially during acidic (< pH 4.5) migration tests at elevated temperatures (70°C).

In one aspect, the present invention pertains to a talc particulate fulfilling food safety criteria which is characterized by a certain XRD morphology index (M) of between 0.950 and 0.999, and a $d_{[4,3]\text{-laser}}$ of 15 μm or less.

In preferred embodiments, the talc particulate of the present invention has a XRD morphology index (M) as defined in Holland and Murtagh, "AN XRD MORPHOLOGY INDEX FOR TALCS:

THE EFFECT OF PARTICLE SIZE AND MORPHOLOGY ON THE SPECIFIC SURFACE

AREA"; JCPDS-International Centre for Diffraction Data, Advances in X-ray Analysis, Vol.42, 2000, pages 421 - 428.

A talc XRD morphology index, calculated from the XRD data, numerically relates the platy character of the talc to its XRD peak intensities. The index can be obtained using Equation 1:

$$M = I_x (I_x + 2I_y)^{-1} \qquad \text{(equation 1)}$$

where $I_x$ is the intensity of the (004) peak and $I_y$ is that of the (020) reflection (overlapped with the (111) and (110) peaks).

The advantage of this morphology index is that it allows one to assign upper and lower limits of the talc texture. According to equation 1 the talc textures can range from 100% blocky at (M = 0) to 100% platy at (M = 1). Therefore, the index can be used to numerically distinguish between blocky and platy talcs.

In preferred embodiments, the talc particulate of the present invention has a XRD morphology index (M) of 0.999 or less, preferably of 0.995 or less, even more preferably of 0.990, most preferably of 0.985 or less and/or of 0.950

and more, preferably of 0.970 or more, more preferably of 0.980 or more. Preferred talc particulates of the present invention therefore may have a XRD morphology index of between 0.950 and 0.999, more preferably of between 0.970 and 0.990, most preferably of between 0.980 and 0.985, in some embodiments of about 0.983.

In preferred embodiments, the talc particulate of the present invention has also a specific $d_{[4,3]\text{-laser}}$ of 15 μm or less as measured by laser analysis (Mie Law) with a Mastersizer™ 3000 (measured according to ISO 13320:2009 revised by ISO 13320:2020. ISO - ISO 13320:2009 - Particle size analysis - Laser diffraction methods).

The parameter "$d_{[4,3]\text{-laser}}$" (or $d_{[4,3]}$) refers to the "Volume or Mass Moment Mean" also called "De Brouckere Mean Diameter". The De Brouckere mean diameter is the mean of a particle size distribution weighted by the volume (also called volume-weighted mean diameter, volume moment mean diameter or volume-weighted mean size). It is the mean diameter, which is directly obtained in particle size measurements, where the measured signal is proportional to the volume of the particles.

The De Brouckere mean is defined in terms of the moment-ratio system as,

$$D[4,3] = \frac{\Sigma n_i D_i^4}{\Sigma n_i D_i^3}$$

Where $n_i$ is the frequency of occurrence of particles in size class i, having a mean $D_i$ diameter. The "De Brouckere mean" ($d_{[4,3]\text{-laser}}$) has the advantage of being more sensitive to the larger particles, which take up the largest volume of the sample, therefore giving crucial information about the product.

Preferably the talc particulate of the present invention has a $d_{[4,3]\text{-laser}}$ of 18 μm or less, more preferably of 16 μm or less, even more preferably of 12 μm, more preferably of 9.5 μm or less, most preferably of 8 μm or less. In some embodiments preferably of 6.5 μm or more, even more preferably of 6.6 μm or more, most preferably of 6.7 μm or more. Preferably between 6.0 and 17.9 μm, more preferably between 6.2 and 15.5 μm, even more preferably between 6.4 and 12.5 μm, most preferably between 6.5 and 8.0 μm; in one embodiment about 6.7 μm. In further embodiment the talc particulate of the present invention has a $d_{[4,3]\text{-laser}}$ of between 6.6 μm and 15.0 μm, more preferably of between 6.7 μm and 11.0 μm, even more preferably of between 6.7 μm and 8.0 μm (± 10%).

Without being bound to theory, it seems that the talc particulates with the XRD and $d_{[4,3]\text{-laser}}$-values as claimed in claim 1 do show decreased migration due to an advantageous integration into the polymer which at least partially immobilizes any component which otherwise would migrate. This, may also be the explanation for the physical stabilization of the polymers.

In preferred embodiments, the talc particulate of the present invention has also a specific $d_{50}$ and $d_{98}$ as measured by laser analysis (Mie Law) with a Mastersizer™ 3000, also denoted hereinunder as "$d_{50\text{-laser}}$" and "$d_{98\text{-laser}}$".

Unless otherwise stated, particle size properties referred to herein for the talc particulate materials are as measured in a well-known manner by laser analysis (Mie Law) in a fully dispersed condition in an aqueous medium using a Mastersizer™ 3000 (Malvern Panalytical technologies). Preferably the talc particulate of the present invention has a $d_{50\text{-laser}}$ of 5.0 μm or more, more preferably of 5.5 μm or more, even more preferably of 6.0 μm or more, even more preferably of 6.5 μm or more, even more preferably of 6.8 μm or more, most preferably of 7.0 μm or more. In further embodiment the talc particulate of the present invention has a $d_{50\text{-laser}}$ of between 5.0 μm and 9.0 μm, more preferably of between 5.5 μm and 8.5 μm, even more preferably of between 6.0 μm and 8.0 μm, most preferably of between 6.5 μm and 7.5 μm, in one embodiment about 7.0 μm (± 10%).

In the Malvern laser light scattering technique referred to above, the size of particles in powders, suspensions and emulsions may be measured using the diffraction of a laser beam, based on an application of Mie theory. Such a machine, for example a Malvern Mastersizer 3000 (as supplied by Malvern Instruments) provides measurements and a plot of the cumulative percentage by volume of particles having a size, referred to in the art as the 'equivalent spherical diameter' (e.s.d), less than given e.s.d values.

The mean particle size $d_{50}$ is the value determined in this way of the particle e.s.d at which there are 50% by weight of the particles which have an equivalent spherical diameter less than that $d_{50}$ value. The $d_{80}$ value is the value at which 80% by weight of the particles have an esd less than that $d_{95}$ value. The $d_{95}$ value is the value at which 95% by weight of the particles have an esd less than that $d_{95}$ value. The $D_{98}$ value is the value at which 98% by weight of the particles have an esd less than that $d_{98}$ value. Particle size properties may be determined in accordance with ISO 13317-3 (sedigraph method), or any method equivalent thereto.

The mean particle size $d_{50}$ is the value determined in this way of the particle e.s.d at which there are 50% by volume of the particles which have an equivalent spherical diameter less than that $d_{50}$ value. For the avoidance of doubt, the measurement of particle size using laser light scattering is not an equivalent method to the sedimentation method used in other publications.

Preferably the talc particulate of the present invention has a $d_{98\text{-laser}}$ of 55 μm or less, preferably of 30 μm or less, more preferably of 25 μm or less, even more preferably of 20 μm or less, most preferably of 18 μm or less. In further embodiment the talc particulate of the present invention has a $d_{98\text{-laser}}$ of between 55 μm and 15.0 μm, more preferably of between 40 μm and 16.0 μm, even more preferably of between 20 μm and 17.0 μm, most preferably of between 19.5 μm and 17.5 μm, in one embodiment about 18 μm (± 10%).

In preferred embodiments the present invention pertains to a talc particulate fulfilling food safety criteria which is characterized by a certain XRD morphology index (M) of between 0.65 and 0.98, a $d_{50\text{-laser}}$ of between 5.0 μm and 9.0 μm and a $d_{[4,3]\text{-laser}}$ of between 6.6 and 15 μm.

In other preferred embodiments, the present invention pertains to a talc particulate fulfilling food safety criteria which is characterized by a certain XRD morphology index (M) of between 0.65 and 0.98, a $d_{50\text{-laser}}$ of about 7.0 μm and a $d_{98\text{-laser}}$ of about 18.0 μm.

In certain embodiments, the talc particulate of the present invention is further characterized in having at least one of the following features:

i. a specific surface area (BET) (measured according to ISO 9277) of 6 or more, preferably of 6.5 or more, more preferably of 7.0 or more and most preferably of 7.3 or more and of 25 or less, more preferably of 15 or less, even more preferably of 10 or less, most preferably of 8.7 $m^2/g$ or less. In some embodiments the talc particulate of the present invention has a BET of from between 6 to 25 $m^2/g$, more preferably from between 6.5 to 20 $m^2/g$, more preferably from between 7.0 to 15 $m^2/g$; most preferably from 7.3 to 8.7 $m^2/g$. In certain embodiments, the talc particulate has a specific surface area (B.E.T., measured according to ISO 9277) of from about 2.4 to 12 $m^2/g$, or from about 2.8 to 11.4 $m^2/g$, or from about 3.4 to 10.3 $m^2/g$, or from about 5.1 to 9.7 $m^2/g$, or from about 6.7 to 9.3 $m^2/g$, or from about 7.4 to 8.6 $m^2/g$. In one embodiment the specific surface area (B.E.T., measured according to ISO 9277) is about 8.0 $m^2/g$; and/or

ii. a CaO-content of 0.5 wt.-% or less, preferably of 0.3 wt.-% or less, more preferably of 0.25 wt.-% or less, most preferably of 0.1 wt.-% or less; preferably between 0.005 wt.-% and 0.01 wt.-%, more preferably between 0.025 wt.-% and 0.3 wt.-%, most preferably between 0.05 wt.-% and 0.1 wt.-%; and/or

iii. a lamellarity index of between 1.8 - 8.0; and/or

iv. a $D_{80\text{-laser}}$ of 15 μm or less; preferably of 12 μm or less. In certain embodiments, the talc particulate has a $D_{80}$ of from about 8.0 to about 15.0 μm, for example, from about 10.2 to about 12.1 μm, or from about 10.6 to 11.8 μm. In one embodiment the $D_{80}$ is about 11.0 μm; and/or

v. a moisture content at 105°C (according to ISO 787/2) of 0.5% per weight or less, preferably 0.2 % per weight or less. In certain embodiments, the talc particulate has a moisture content at 105°C (according to ISO 787/2) of less than 0.5%, for example, a moisture content at 105°C (according to ISO 787/2) of less than 0.4%, less than 0.3%, less than 0.2%. In certain embodiments, the talc particulate has a moisture content at 105°C (according to ISO 787/2) from about 0.01% to about 0.5%, for example, from about 0.05% to about 0.4%, or from about 0.1% to about 0.3%, or from about 0.15% to about 0.2%. In one embodiment the moisture content at 105°C (according to ISO 787/2) is about 0.2%; In one embodiment the moisture content at 105°C (according to ISO 787/2) is below 0.5%; and/or

vi. a loss on Ignition at 1050°C (M.I. 93009) of less than 6.5% per weight; preferably less than 6.0% or less; and/or

vii. the content of acid soluble substance 0.5 % per weight or less, preferably 0.3 % per weight or less; and/or

viii. a bulk density (according to EN 1097/3) of at least 0.25 $g/cm^3$, preferably of at least 0.4 $g/cm^3$, more preferably of at least 0.5 $g/cm^3$, most preferably of at least 0.8 $g/cm^3$ and less than 1.5 $g/cm^3$, more preferably less than 1.2 $g/cm^3$, most preferably less than 1.0 $g/cm^3$. Preferably between 0.25 to 1.5 $g/cm^3$, preferably between 0.4 to 1.3 $g/cm^3$, more preferably between 0.5 to 1.2 $g/cm^3$, most preferably between 0.80 to 1.0 $g/cm^3$. In some embodiments about 0.9 $g/cm^3$ (± 10%); and/or

ix. In certain embodiments, the talc particulate has a density (according to ISO 787/10) of less than 2.7 $g/cm^3$, for example, of less than 1.4 $g/cm^3$, less than 1.3 $g/cm^3$. In certain embodiments, the talc particulate has a density (according to ISO 787/10) from about 0.15 $g/cm^3$ to about 1.4 $g/cm^3$, for example, from about 0.25 $g/cm^3$ to about 1.3 $g/cm^3$, or from about 0.5 $g/cm^3$ to about 1.1 $g/cm^3$; and/or x. In certain embodiments, the talc particulate has a content of acid soluble substance of less than 5 % per weight, for example, of less than 4 % per weight, less than

3 % per weight, less than 2.5 % per weight, less than 2 % per weight. In certain embodiments, the talc particulate has a content of acid soluble substance from about 0.25 % per weight to about 5 % per weight, for example, from about 0.5 % per weight to about 4% per weight, or from about 1.0 % per weight to about 3% per weight, or from about 1.5 % per weight to about 2.5% per weight. In one embodiment the moisture content at 105°C (according to ISO 787/2) is about 2.5 % per weight.

Further, the talc particulates of the present invention show, in comparison with conventional talc particulates and/or calcium-carbonate, the advantageous features that, when used as a filler in polymers, they do not negatively change parameters such as melting point, vicat, and/or glass transition temperature.

Further, some features of the polymers, like rigidity and/or shrinkage, are even improved when the talc particulates of the present invention are used as a filler and in comparison with conventional talc particulates and/or calcium-carbonate used as a filler. The polymers for the tests were made by compounding the resin with fillers at 40% w/w by means of a twin screw extruder 25 mm (32 L/D). Injection molding of ISO specimens for mechanical characterization and 67 mm disks having a thickness of 1 mm. All raw materials dried prior to hot mixing:

- The stiffness of the polymer was improved, visible in a flexural modulus [MPa] for PLA as a polymers filled with 40wt.-% of talc particulate of 11600 or more, preferably of 12000 or more, most preferably of 13000 or more, in one embodiment having a flexural modulus [MPa] of about 13135 (± 10%).

- In another embodiment the stiffness of the polymer was improved, visible in a flexural modulus [MPa] for a PLA as a polymers filled with 25wt.-% of talc particulate of 9069 or more; 9478 or more; 10117 or more (± 10%).

- The heat distortion temperature (HDT) was improved, especially for PBS as polymer, visible in an increase of HDT (1820 kPa [°C]) by a factor of 1.05 or more as compared to the polymer without the filler, preferably by a factor of 1.25 or more, most preferably by a factor of 1.4 or more, in one embodiment having an increase of HDT (1820 kPa [°C]) by a factor of about 1.45. Further visible in an increase of HDT (755 kPa [°C]) by a factor of 1.03 or more as compared to the polymer without the filler, preferably by a factor of 1.13 or more, most preferably by a factor of 1.35 or more, in one embodiment having an increase of HDT (1820 kPa [°C]) by a factor of about 1.36.

Especially the improved HDT allows the use of the polymers for applications in which hot foodstuff or beverages are in contact with the polymer, such as applications as coffee or tea cups, microwave dishes, instant food containers and/or, in general, single-use tableware, etc.

As used herein, the term "talc" means either the magnesium silicate mineral, or minerals belonging to chlorite group (such as clinochlore or chamosite), or a mixture of the two, optionally associated with other minerals, for example, dolomite and/or magnesite.

In certain embodiments, the talc is the magnesium silicate mineral or the mineral chlorite, or a mixture thereof. Preferably, the talc particulate comprises only little amounts of dolomite and/or magnesite, or combinations thereof. The amount of dolomite and/or magnesite in the talc may be less than about 5% by weight, based on the total weight of talc, for example, less than about 3% by weight, or less than about 1 % by weight, or less than about 0.5 % by weight, or 0.25 % by weight or less, based on the total weight of talc. In one embodiment the talc particulate is free of dolomite and/or magnesite.

The weight ratio of magnesium silicate mineral to chlorite may be from about 5:1 to about 1:4, for example, from about 4:1 to about 1:1, or from about 4:1 to about 2:1, or from about 4:1 to about 2.5:1, or from about 4:1 to about 3:1, or about 2:1, or about 3:1, or about 4:1.

In certain embodiments, the talc particulate of the present invention has a content of below 0.3 wt.-%, more preferably of below 0.1 wt.-%, of at least one of the impurities selected from the list consisting of Ba, Co, Mn, Zn, Cu, Fe, Li, Al, Ni, Sb, Hg, As, Cr, Pb, Cd, La, Eu, Gd, K, Na and Tb; as well as any ionic form thereof.

In certain embodiments, the talc particulate comprises less than 200 ppm, more preferred less than 100 ppm and/or is free of other inorganic particulate material (i.e., an inorganic particulate material other than talc), for example, an alkaline earth metal carbonate, sulphate or oxysulphate, such as calcium carbonate, magnesium carbonate, dolomite, gypsum, magnesium oxysulphate, a hydrous kandite clay such as kaolin, halloysite or ball clay, an anhydrous (calcined) kandite clay such as metakaolin or fully calcined kaolin, mica, perlite, feldspars, nepheline syenite, wollastonite, diatomaceous earth, barite, glass, and natural or synthetic silica or silicates. In certain embodiments, the talc particulate is mixed or blended with one or more of an alkaline earth metal carbonate, sulphate, or oxysulphate, mica and kaolin.

The inventive talc particulates of the present invention do show reduced migration when used as a filler in biodegradable plastics. At the same time the other beneficial properties of plastics, especially the plastics biodegradability remains unaffected.

General information about how to determine specific migration is available in CEN document "EN 13130-1:2004

Materials and articles in contact with foodstuffs - Plastics substances subject to limitation - Part 1: Guide to test methods for the specific migration of substances from plastics to foods and food simulants and the determination of substances in plastics and the selection of conditions of exposure to food simulants". CEN has also established methods for the determination of some migrants in food simulants or foods.

Details of the migration test can be derived from the example section.

The reduced "$Ca^{2+}$-migration" or "$Mg^{2+}$-migration" within that test does not only show the reduced migration of $Ca^{2+}$-ions as such, but is also a general indicator of the general property of the talc particulate, since it indicates whether also other impurities contained in a talc particulate will migrate into the acidic water solution. Thus, the migration test is in one embodiment a measurement of the property of the talc particulate to not "leak" impurities, when used as a filler in a polymer.

As used herein, the term "lamellarity index" is defined by the following ratio:

$$(d_{mean} - d_{50}) / d_{50}$$

in which "$d_{mean}$" is the value of the mean particle size ($d_{50}$) obtained by a particle size measurement by wet Malvern laser scattering (standard ISO - ISO 13320:2009 - Particle size analysis - Laser diffraction methods) and "$d_{50}$" is the value of the median diameter obtained by sedimentation using a sedigraph (standard ISO 13317-3:2001), as described below.

Reference may be made to the article by G. Baudet and J. P. Rona, Ind. Min. Mines et Carr. Les techn. June, July 1990, pp 55-61, which shows that this index is correlated to the mean ration of the largest dimension of the particle to its smallest dimension.

As used herein, "specific surface area (BET)" means the area of the surface of the particles of the talc particulate with respect to unit mass, determined according to the BET method by the quantity of nitrogen adsorbed on the surface of said particles so to as to form a monomolecular layer completely covering said surface (measurement according to the BET method, ISO 9277:2010). In certain embodiments, specific surface is determined in accordance with ISO 9277, or any method equivalent thereto.

According to certain embodiments, the talc particulate (after disaggregation) comprises less than about 500 ppm of particles having a particle size of equal to or greater than 55 μm, preferably less than 300 ppm of particles having a particle size of equal to or greater than 55 μm; most preferably less than 200 ppm of particles having a particle size of equal to or greater than 55 μm.

In certain embodiments, the ppm of particles having a particle size of equal to or greater than 55 μm is determined by analysis using a screen or sieve with an appropriately sized aperture size, i.e., a screen or sieve having an aperture size of 55 μm, for example, a 55 μm screen available from Controlab™.

The analysis may be carried out based on 1 kg of dry talc. For example, for a slurry at 10 % solid content, 10 kg of slurry will be weighed and screened, with the residue collected and weighed with a dessicator in to determine the ppm of particles having a particle size of equal to or greater than 55 μm.

Unexpectedly, it has been found that by reducing the ppm of particles having a particle size of equal to or greater than 55 μm, for example, to a level less than 500 ppm, for example, to a level less than about 300 ppm, or even equal to or less than 200 ppm, improvements in one or more mechanical properties of polymer compositions filled with the talc particulate may be obtained; for example, impact resistance, as observed on falling weight impact or ISO 179-2:2020 measurements.

In certain embodiments, the talc particulate comprises less than 250 ppm of particles having a particle size of equal to or greater than 40 μm, for example, equal to or less than 100 ppm, or equal to or less than about 75 ppm, or equal to or less than 50 ppm, or equal to or less than about 40 ppm, or equal or less than about 30 ppm, or equal to or less than about 20 ppm of particles having a particle size of equal to or greater than 20 μm. In certain embodiments, the talc particulate comprises at least about 1 ppm, for example, at least about 5 ppm, or at least about 10 ppm of particles having a particle size of equal to or greater than 20 μm.

In certain embodiments, the talc particulate has a lamellarity index of at least about 1.8, for example, at least 2.0, at least 2.2, or at least about 2.8, or at least about 3.2, or at least about 3.4. In certain embodiments, the talc particulate has a lamellarity index of less than about 3.5 or less than or equal to about 3.3, or equal to or less than about 2.8. In certain embodiments, the talc particulate has a lamellarity index of from about 1.8 to about 3.5, for example, from about 2.0 to about 3.3, or from about 2.0 to about 2.8, for example, from about 2.5 to about to about 3.45, or from about 2.8 to about 3.3, or from about 2.8 to about 3.0. One finding is that a higher lamellarity index talc seems to provide higher stiffness in a polymer composition.

Herein, the reference to an amount of particles in terms of parts per million ("ppm") having a particle size smaller or larger than a certain size is a reference to ppm by weight.

In yet a further aspect of the present invention, the talc particulate according to any of the preceding claims,

wherein the surface of said talc is treated with a surface treatment agent. Furthermore, the beneficial "$Ca^{2+}$-migration"-property results in the best mechanical properties achievable per talc loading unit.

Thus, in one aspect of the invention, the talc particulate of the present invention is for rigid polymer applications, where the talc particulate is used as a filler exceeding 20-40 % by weight; and where stability both at high temperature as well as acidic food environments are needed. Such an application may be for example a soup plate made of said polymer, which contains tomato soup (pH range of 3.5-4.7) and is heated in a microwave (up to 100°C). Under these conditions, the inventive talc particulate is significant different from conventional talc particulates (even from some of the purest grades) and from other fillers having water soluble components (see also example section with comparison experiments).

Another advantage of the inventive talc particulate is the limited content in fluorine versus conventional talc particulates. Items which are going to be composted, i.e. biodegradable polymers, must not exceed a fluorine content of 1000 ppm, preferably of about 300-400 ppm or less, thus, the talc particulates of the present invention with low or absent fluorine content are preferred.

A talc of suitable characteristics is crushed and milled to a proper size to have the minerals composing the rock individually present in the powder. The powder is dispersed in water; a suitable surfactant can be added to the dispersion. The slurry is pumped in a flotation circuit where it undergoes a process of flotation: air is pumped through the slurry; talc, thanks to its hydrophobic nature, sticks to the air bubble and it is transported to the surface by the formed foam; the other minerals, hydrophilic, sink to the bottom of the tank. The foam containing talc is concentrated in a thickener, where it is partially separated from the water, pumped in a filter press that remove the remaining water in excess. The filter-cakes produced in this way are composed by talc with a very high purity (>98%) and some residual water (about 12-16% by weight).

The filter-cakes are sent to a flesh drier where they reduce further the moisture content, till a moisture content level below 0.5%. This material is sent to roller mills to reduce its size to powder having a residue @ 40 μm screen of 5%max; then it is further micronized through jet mills till the wanted fineness.

The inventive talc particulate shows the beneficial "$Ca^{2+}$-migration"-property in at least one embodiment also because of the beneficiation process which is submitted hereinunder.

Thus, in another aspect the present invention pertains to a process for preparing a talc particulate having a relative $Ca^{2+}$-migration factor of less than 0.25% measured in a standardized $Ca^{2+}$-migration test according to EN 13130-1:2004, said process comprising:

(a) delaminating a liquid suspension of a relatively coarse talc particulate having an initial particle size with a $D_{50\ (sedi)}$ of greater than 5.0 μm

(b) optionally, treating the suspension to remove the coarser particles, e.g. by using hydro-cyclones or by wet screening;

(c) after achieving the wanted fineness, at least partially drying the suspension, thereby obtaining a talc particulate having a relative $Ca^{2+}$-migration factor of less than 0.25% measured in a standardized $Ca^{2+}$-migration test according to EN 13130-1:2004.

In a further aspect, the talc is further treated with a surface treatment agent prior to step (c).

As used herein, the term "surface treated" means particles of the talc are contacted with a compound which adheres (e.g., physisorbed or bonded) or is otherwise associated with the surface of the talc.

In certain embodiments, the talc particulate is treated with a surface treatment agent. Surface treatment of the talc may serve to reduce or eliminate aggregation of the talc particulates and/or enhance incorporation of the talc particulate into a polymer composition.

Suitable surface treatment agents include a compound with hydrophobic carbon chains bearing polar radicals, for example, the family of amines, silanes, siloxanes, alcohols or acids and metals salts thereof.

In certain embodiments, surface treatment agent is a polyether or a derivative thereof, for example, polyether modified polysiloxane.

In certain embodiments, the polyether is a polyoxyalkylene (POA), for example, polyalkylene glycol (PAG) or polyalkylene oxide (PAO). As used herein, the term 'polyalkylene glycol' means a POA having a number average molecular mass below 20,000 g/mol, and the term 'polyalkylene oxide' means a POA having a number average molecular mass above 20,000 g/mol. In certain embodiments, the surface treatment agent comprises or is a polyalkylene glycol having a number average molecular mass of from about 100 to about 15,000 g/mo, for example, from about 200 to about 10,000 g/mol, or from about 500 to about 9000 g/mol, or from about 1000 to about 9000 g/mol, or from about 2000 to about 900 g/mol, or from about 4000 to about 9000 g/mol, or from about 6000 to about 9000 g/mol, or from about 6000 to about 8500 g/mol.

In certain embodiments, the polyether is a polyalkylene oxide selected from one or more of paraformaldehyde (polymethylene oxide), polytetramethylene glycol, polytetramehtylene ether glycol, polyethylene oxide, polypropylene oxide, polybutylene oxide, and combinations thereof.

In certain embodiments, the surface treatment agent comprises or is polyethylene glycol. In certain embodiments, the surface treatment comprises or is a mixture of polyethylene glycol and polypropylene glycol (PPG). In certain embodiments, the surface treatment agent is polyethylene glycol having a number average molecular mass of from about 200 to about 10,000 g/mol, for example, from about 500 to about 9000 g/mol, or from about 1000 to about 9000 g/mol, or from about 2000 to about 900 g/mol, or from about 4000 to about 9000 g/mol, or from about 6000 to about 9000 g/mol, or from about 6000 to about 8500 g/mol. An exemplary PEG includes the Puriol™ range of polyglycols from BASF, for example, Puriol™ 8005.

In certain embodiments, the surface treatment agent comprise or is a fatty acid, and/or a metal salt thereof, for example, stearic acid or a metal stearate, such as magnesium, calcium or zinc stearate. Also other known surface treatments may be applied as long as these are compatible with food safety criteria.

The surface treatment agent may be added in an amount effective to achieve the desired result.

In certain embodiments, the quantity of surface treatment agent is from about 0.1 % to 5 % by weight with respect to the weight of talc, for example, from about 0.1 % to 2 % by weight with respect to the weight of talc.

Surface treatment agents may be applied by adding to the talc particulate and mixing using conventional methods. Surface treatment agents may be applied during preparation of the talc particulate from a relative coarse talc starting material and before the talc particulate is added to a polymer composition.

In yet a further aspect, the talc is then mixed to a polymer composition.

In one embodiment compounding of resin with fillers at 40% (w/w) was done by means of a twin screw extruder 25 mm (32 L/D). Injection molding of ISO specimens for mechanical characterization and 67mm disks having thickness of 1 mm for migration tests. All raw materials were dried prior hot mixing.

In one preferred embodiment the talc particulate is part of a polymer composition. In one embodiment the talc may be present between 0.1 % by weight and 49.9% by weight, depending on the rigidity needed for the final polymeric product. Low contents normally lead to more flexible polymer compositions, whereas higher contents of talc particulate increase the stability and rigidity of the polymer.

Thus, in one embodiment about between 1 % by weight and 20 % by weight of talc particulate are mixed to a polymer composition to result in a stabilized, but still flexible polymer. In another embodiment about between 20 % by weight to 40 % by weight are mixed to a polymer composition to result in a stabilized, and more rigid polymer. In one embodiment at least 25 % by weight, at least 30 % by weight, at least 35 % by weight, at least 40 % by weight talc particulate are added to the polymer composition.

The talc particulate may have been surface treated and/or not surface treated before being added to the polymer composition.

The (optionally surface treated) talc particulate of the present invention may be used as a filler in a polymer composition. The talc particulate may be used as an extender filler or a functional filler. As used herein, the term "functional filler" is understood to mean an additive incorporated into a polymeric composition with a view to enhancing one or more of its physical (e.g., mechanical) properties.

An "extender filler" typically modifies the properties of the polymer composition very little and essentially serves to reduce cost.

In certain embodiments, the talc particulate may be used as a functional filler in a polymer composition, for example, to modify or enhance one or more mechanical properties of the polymer composition.

In certain embodiments, the talc particulate is used as an extended filler, for example, to supplement or supplant other filler materials, which may be more expensive or more difficult to incorporate into the polymer composition.

In certain embodiments, the polymer composition comprises from about 5 to about 70 % by weight of (optionally surface treated) talc particulate, based on the total weight of the polymer composition, for example, from about 10 to about 70 % by weight, or from about 20 to about 60 % by weight, or from about 25 to about 50 % by weight, or from about 30 to about 50 % by weight, or from about 30 to about 45 % by weight, or from about 30 to about 40 % by weight, or from about 35 to about 45 % by weight of talc particulate. In certain embodiments, the polymer composition comprises at least about 10 % by weight of talc particulate, based on the total weight of the polymer composition, for example, at least about 20 % by weight, or at least about 25 % by weight, or at least about 30 % by weight, or at least about 35 % by weight, or at least about 40 % by weight of talc particulate.

The polymer composition may comprise any natural or synthetic polymer or mixture thereof. However, biobased and/or biodegradable polymers are preferred.

The polymer may, for example, be thermoplastic or thermoset. The term "polymer" used herein includes homopolymers and/or copolymers, as well as crosslinked and/or entangled polymers.

The term "precursor" as may be applied to the polymer component will be readily understood by one of ordinary skill in the art. For example, suitable precursors may include one or more of: monomers, cross-linking agents, curing

systems comprising cross-linking agents and promoters, or any combination thereof. Where, according to the present invention, the talc particulate is mixed with precursors of the polymer, the polymer composition will subsequently be formed by curing and/or polymerising the precursor components to form the desired polymer.

Biodegradable thermoplastic polymers include polylactic acid (poly-lattide), poly hydroxy alkanoates, poly-hydroxy-butyrate, poly hydroxy-hexanoate/poly-hydroxy-butyrate copolymer, poly-hydroxy-butyrate-valerate, poly capro-lacton, poly-buthylen adipate terephtalate, and poly-buthylene-sebacate-terephtalate; as well as any mixtures thereof.

Less preferred polymers, including homopolymers and/or copolymers, comprised in the polymer composition of the present invention may be prepared from one or more of the following monomers: acrylic acid, methacrylic acid, methyl methacrylate, and alkyl acrylates having 1-18 carbon atoms in the alkyl group, styrene, substituted styrenes, divinyl benzene, diallyl phthalate, butadiene, vinyl acetate, acrylonitrile, methacrylonitrile, maleic anhydride, esters of maleic acid or fumaric acid, tetrahydrophthalic acid or anhydride, itaconic acid or anhydride, and esters of itaconic acid, with or without a cross-linking dimer, trimer, or tetramer, crotonic acid, neopentyl glycol, propylene glycol, butanediols, ethylene glycol, diethylene glycol, dipropylene glycol, glycerol, cyclohexanedimethanol, 1,6 hexanediol, trimethyolpropane, pentaerythritol, phthalic anhydride, isophthalic acid, terephthalic acid, hexahydrophthalic anyhydride, adipic acid or succinic acids, azelaic acid and dimer fatty acids, toluene diisocyanate and diphenyl methane diisocyanate.

The polymer may be selected from one or more of polymethylmethacrylate (PMMA), polyacetal, polycarbonate, polyvinyls, polyacrylonitrile, polybutadiene, polystyrene, polyacrylate, polyethylene, polypropylene, epoxy polymers, unsaturated polyesters, polyurethanes, polycyclopenta-dienes and copolymers thereof. Suitable polymers also include liquid rubbers, such as silicones.

The polymers which may be used in accordance with the invention are advantageously thermoplastic polymers.

Thermoplastic polymers are those which soften under the action of heat and harden again to their original characteristics on cooling, that is, the heating-cooling cycle is fully reversible. By conventional definition, thermoplastics are straight and branched linear chain organic polymers with a molecular bond.

Examples of polymers which may be used in accordance with the invention although less preferred because they are not biodegradable include, but are not limited to polyethylene, for example, linear low density polyethylene (LLDPE) and medium density grades thereof, high density polyethylene (HDPE), low density polyethylene (LDPE), polypropylene (PP), polyethylene terephthalate (PET), vinyl/polyvinyl chloride (PVC), polystyrene, and mixtures thereof.

In certain embodiments, the polymer is a polyalkylene polymer, for example, polyethylene, polypropylene, polybutylene, or a copolymer of two or more of ethylene, propylene and butylenes monomers, for example, an ethylenepropylene copolymer.

In certain embodiments, the polymer is a mixture of two or more of propylene, polyethylene and ethylene-propylene copolymer, for example a mixture of propylene and polyethylene.

In certain embodiments, the polymer comprises, consists essentially of, or consists of polypropylene or polyethylene or a mixture of polypropylene and polyethylene.

In yet a further embodiment the polymer may be preferably selected from the group consisting of PLA, PBAT and PBS, and/or any combination thereof.

The polymer composition can be prepared by mixing of the components thereof intimately together. The talc particulate may then be suitably blended, e.g., dry blended, with the mixture of components and any desired additional components, before processing to form a final polymer composite or article.

The polymer composition may be prepared by combining talc particulate, as described herein, with a polymer in amount of at least about 0.1 % by weight, based on the total weight of the polymer composition, for example, in an amount of at least about 0.5 % by weight, in an amount of at least about 1 % by weight, in an amount of at least about 2 % by weight, or least about 3 % by weight, or at least about 5 % by weight, or at least about 10 % by weight, or at least about 15 % by weight, or at least about 20 % by weight, or at least about 30 % by weight, or at least about 35 % by weight, or at least about 40 % by weight, or at least about 45 % by weight, or at least about 50 % by weight, or at least about 60 % by weight, or at least about 70 % by weight, or at least about 80 % by weight, based on the total weight of the polymer composition. High percentages are preferred for master-batch applications.

In certain embodiments, the amount of talc particulate is from about 1 to about 70 % by weight, based on the total weight of the polymer composition, for example, from about 5 to about 70 % by weight, or from about 10 to about 70 % by weight, or from about 20 to about 60 % by weight, or from about 25 to about 50 % by weight, or from about 30 to about 50 % by weight, or from about 30 to about 45 % by weight, or from about 30 to about 40 % by weight, or from about 35 to about 45 % by weight, based on the total weight of the polymer composition.

In certain embodiments, the polymer composition comprises at least about 30 % by weight polymer, based on the total weight of the polymer composition, for example, from about 30 to about 90 % by weight polymer, or from about 40 to about 80 % by weight polymer, from about 50 to 75 % by weight polymer, from about 50 to about 70 % by weight polymer, or from about 55 to about 70 % by weight polymer, or from about 60 to about 70 % by weight polymer, or from about 55 to 65 % by weight polymer, based on the total weight of the polymer composition.

Preparation of the polymer compositions of the present invention can be accomplished by any suitable mixing method known in the art, as will be readily apparent to one of ordinary skill in the art.

Such methods include dry blending of the individual components or precursors thereof and subsequent processing in a conventional manner. Certain of the ingredients can, if desired, be premixed before addition to the compounding mixture.

In the case of thermoplastic polymer compositions, such processing may comprise melt mixing, either directly in an extruder for making an article from the composition, or premixing in a separate mixing apparatus. Dry blends of the individual components can alternatively be directly injection moulded without pre-melt mixing.

The polymer composition can be prepared by mixing of the components thereof intimately together. The talc particulate may then be suitably dry blended with the polymer and any desired additional components, before processing as described above.

Other filler compounds, may be added and blended in at the mixing stage.

For the preparation of cross-linked or cured polymer compositions, the blend of uncured components or their precursors, and, if desired, the talc particulate and any desired non-talc component(s), will be contacted under suitable conditions of heat, pressure and/or light with an effective amount of any suitable cross-linking agent or curing system, according to the nature and amount of the polymer used, in order to cross-link and/or cure the polymer.

For the preparation of polymer compositions where the talc particulate and any desired other component(s) are present in situ at the time of polymerisation, the blend of monomer(s) and any desired other polymer precursors, talc particulate and any other component(s) will be contacted under suitable conditions of heat, pressure and/or light, according to the nature and amount of the monomer(s) used, in order to polymerise the monomer(s) with the talc particulate and any other component(s) in situ.

In certain embodiments, the talc particulate is dispersed with agitation into a mixture comprising polymer (for example, polypropylene) and optionally a curing agent. The mixture may further comprise a mould release agent.

The resulting dispersion can be degassed to remove entrained air, moisture and volatile components.

The starting polymer mixture can further comprise a pre-polymer (for example, propylene monomer). The prepolymer may or may not correspond to the starting polymer.

Generally, the greater the amount of talc particulate added, the higher the viscosity of the dispersion.

The compounded compositions may further comprise additional components, such as slip aids, process aids, mould release agents and antioxidants.

Suitable mould release agents will be readily apparent to one of ordinary skill in the art, and include fatty acids, and zinc, calcium, magnesium and lithium salts of fatty acids and organic phosphate esters.

Specific examples are stearic acid, zinc stearate, calcium stearate, magnesium stearate, lithium stearate calcium oleate, zinc palmitate. Typically, slip and process aids, and mould release agents are added in an amount less than about 5 wt. % based on the weight of the masterbatch. Polymer articles, including those described above, may then be extruded, thermoformed or injected moulded using conventional techniques known in the art, as will be readily apparent to one of ordinary skill in the art. Thus, as described below, the present invention is also directed to articles formed from the polymer compositions of the present invention.

In certain embodiments, the polymer composition comprises a colorant which, if present, will be added during compound of the polymer composition. The colorant may be added in the form of a masterbatch before or during the final forming process.

In certain embodiments, talc particulate is added to a twin-screw extruder to which unfilled polymer is being fed and made molten. The talc particulate is fed into the extruder through a hopper, for example, via gravimetric feeding, and uniformly blends with the polymer. The mixture emerges from the extruder and may be cooled.

Then, for example, the mixture can be further thermoformed or injection moulded into useful shapes.

The methods described above may include compounding and extrusion. Compounding may be carried out using a co-rotating intermeshing twin screw compounder, for example, a Clextral BC 21 double screw extruder or a Leistritz ZSE 18 double screw extruder or Baker Perkins 25 mm twin screw compounder. The polymer, talc particulate and optional additional components may be premixed and fed from a single hopper.

The resulting melt may be cooled, for example, in a water bath, and then pelletized. Test pieces, e.g., ISO specimens, may be injection moulded or cast or blown into film.

The barrel temperature may be between about 100 °C and about 300 °C, for example, between about 150 °C and about 280 °C, for example, between about 180 °C and about 250 °C, or between about 200 and 230 °C.

Screw speed may be between about 100 and 1200 rpm, for example, between about 100 and 1000 rpm, for example, between about 200 and 800 rpm, for example, between about 250 and 650 rpm, for example, between about 200 and 400 rpm, or between about 500 and 700 rpm. In certain embodiments, screw speed is about 300 rpm. In other embodiments, screw speed is about 600 rpm.

Suitable injection molding apparatus includes, for example, a Billion 50T Proxima press. The polymer composition may be dried prior to molding. Drying may be carried out at any suitable temperature, for example, about 60°C,

for a suitable period of time, for example, between about 1 hours and 20 hours, for example, between about 2 and 18 hours, or between about 1 and 3 hours, or between about 4 and 8 hours, or between about 12 and 18 hours.

The temperature during drying may be kept constant or varied. In certain embodiments, the temperature during drying is between about 70 and 120 °C, for example, between about 80 and 100 °C, for example, about 90°C.

Molding is generally conducted at a temperature at which the polymer composition is flowable. For example, the molding temperature may be between about 100 and 300 °C, for example, between about 200 and 300 °C, or between about 240 and about 280°C. Following molding the molded piece will be allowed to cool.

Other suitable processing techniques include gas-assisted injection molding, calendaring, vacuum forming, thermoforming, blow-molding, drawing, spinning, film forming, laminating or any combination thereof. Any suitable apparatus may be used, as will be apparent to one of ordinary skill in the art.

The polymer composition can be processed to form, or to be incorporated in, articles of commerce in any suitable way, as described herein. The articles which may be formed from the polymer composition are many and various.

Examples include single use tableware products, food containers, hot beverage cups, coffee pods, food packing trays even suitable for microwave, forks, knives, spoons, teaspoons, noodles cups, shopping bags, flexible storage bags, food bags, etc...

In one preferred embodiment the talc particulate is part of a polymer composition, wherein the polymer is a biodegradable and/or bio-based polymer.

In general the term "biopolymer" encompasses cationic polysaccharides, neutral polysaccharides, anionic polysaccharides, polyphenols and polypeptides, as well as combinations and derivatives thereof. The table in fig. 1 shows a wide number of biodegradable polymers, classified according to their synthesis process, for example:

1. polymers from biomass such as agro-polymers of agro resources (for example, amide, cellulose, lipids, etc.);

2. polymers obtained from microbial production (for example fermenting), such as poly-hydroxy-alkanoates, whose generic formula is:

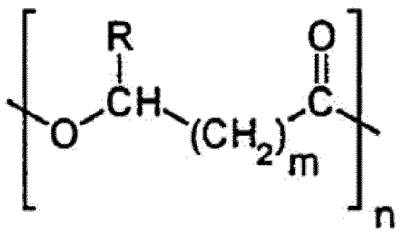

If m=1 and R=H, there is PHA

If m=1 and R=CH3, there is PHB

It must be noted that, if m=0 and R=CH3, there is PLA

3. polymers obtained with conventional synthesis processes either from monomers coming from agro-resources, for example, poly-lactic acid (PLA), or from monomers coming from fossil resources.

The materials can be obtained either from renewable resources or from fossil sources, but all final polymers are equally biodegradable and compostable according to UNI EN13432 technical standard. These biodegradable polymers can further be classified into two main categories:

1. agro-polymers;

2. biodegradable polyesters or bio-polyesters

One can differentiate "biopolymers" in native bio-polymers, such as for example cellulose-derivatives (e.g. cellulose acetate), viscose und cellophane, celluloid, starch, thermoplastic starch; bio-based polymers, such as for example polylactid (PLA), polyhydroxybutyrat (PHB), thermoplastic based on lignin, epoxyacrylates based on oils; degradable mineral oil-based polymers, such as certain polyesters, polyvinyl alcohols, polybutylenadipat-terephthalat (PBAT), poly-butylensuccinat (PBS), polycaprolactone (PCL) and polyglycolid (PGA).

In one embodiment the biopolymer is selected from the list comprising:

- Polyhydroxyalkanoates or PHAs are polyesters produced in nature by numerous microorganisms, including through bacterial fermentation of sugars or lipids. When produced by bacteria they serve as both a source of energy and as a carbon store. More than 150 different monomers can be combined within this family to give materials with extremely different properties. These plastics are biodegradable and are used in the production of bioplastics.

- Polyhydroxybutyrate (PHBs) is a polyhydroxyalkanoates (PHA), a polymer belonging to the polyesters class that are of interest as bio-derived and biodegradable plastics. The poly-3-hydroxybutyrate (P3HB) form of PHB is probably the most common type of polyhydroxyalkanoate, but other polymers of this class are produced by a variety of organisms: these include poly-4-hydroxybutyrate (P4HB), polyhydroxyvalerate (PHV), polyhy-droxyhexanoate (PHH), polyhydroxyoctanoate (PHO) and their copolymers.

- Polybutylene adipate terephthalate (PBAT) is a biodegradable random copolymer, specifically a copolyester of adipic acid, 1,4-butanediol and terephthalic acid (from dimethyl terephthalate). PBAT is produced by many different manufacturers and may be known by the brand names ecoflex®, Wango, Ecoworld, Eastar Bio, and Origo-Bi. It is also called poly(butylene adipate-co-terephthalate) and sometimes polybutyrate-adipate-terephthalate (a misnomer) or even just "polybutyrate".[2] It is generally marketed as a fully biodegradable alternative to low-density polyethylene, having many similar properties including flexibility and resilience, allowing it to be used for many similar uses such as plastic bags and wraps. The structure of the PBAT polymer is shown to the right. It is depicted as a block co-polymer here due to the common synthetic method of first synthesizing two copolymer blocks and then combining them. However, it is important to note that the actual structure of the polymer is a random co-polymer of the blocks shown.

- Polylactic acid or polylactide (PLA) is a thermoplastic polylactic acid aliphatic polyester derived from renewable resources. In 2010, PLA had the second highest consumption volume of any bioplastic of the world, although it is still not a commodity polymer. Its widespread application has been hindered by numerous physical and processing shortcomings.

- Poly butylene succinate (PBS) is a biodegradable polymer that can be bio-based when sebacic acid is used as co-monomer (PBST).

- Poly capro lactone (PCL) is a biodegradable polyester with a low melting point of around 60 °C. This polymer is often used as an additive for resins to improve their processing characteristics and their end use properties (e.g., impact resistance). Being compatible with a range of other materials, PCL can be mixed with starch to lower its cost and increase biodegradability or it can be added as a polymeric plasticizer.

- Poly glycolic acid (PGA), typically formed in fibres, even for biomedical applications like sutures.

In yet another embodiment PLA and PHB are preferred to be mixed with the talc-particulate.

The term "Food contact materials" or "FCMs", as used herein refers to materials or articles that come into direct contact with food and drinks.

These include both food package materials and any other materials or articles (e.g., storage containers and food processing machines).

Packaging materials, which carry all necessary information about the product, such as the food ingredients and guidance for storage and preparation, usually have direct contact with food and therefore have to be safe and stable.

FCMs should not change the nature, substance or quality of the food and must not transfer their components into the foods in unacceptable quantities (migration), otherwise they do not comply with health and safety requirements.

In certain embodiments, the polymer compositions and/or polymer composites and/or of the present invention may be characterised in terms of a physical or mechanical property or properties.

In certain embodiments, polymer compositions and/or polymer composites and/articles formed therefrom may be characterized in terms of impact properties, also referred to as impact strength, for example, Izod impact strength or falling weight index (FWI). These properties may be determined in accordance with the methods described in the Examples below. In certain embodiments, the polymer composition and/or polymer composite and/or article formed therefrom, comprising an amount of talc particulate (e.g., at least about 2 % by weight, or at least about 5 % by weight, or at least about 10 % by weight, or at least about 15 % by weight, or at least about 20 % by weight, or at least about 30 % by weight, or at least about 35 % by weight, or at least about 40 % by weight) may have Izod impact strength and/or a FWI (at 0 °C or 20 °C) which is comparable to, or improved relative to, a polymer composition and/or polymer composite and/or article formed therefrom, comprising a comparable amount of a talc particulate that comprises greater than 500 ppm of particles having a particle size of equal to or greater than 45 mm, for example, a comparable amount of a talc

particulate that comprises greater than 1000 ppm of particles having a particle size of equal to or greater than 45 mm.

For instance, in certain embodiments the Izod impact strength may be improved by at least 1%, or at least 2%, or at least 3%, or at least 4%, or at least 5%, or at least 10%, or at least 15%, or at least 20% relative to, a polymer composition and/or polymer composite and/or article formed therefrom, comprising a comparable amount of talc particulate that comprises greater than 500 ppm of particles having a particle size of equal to or greater than 45 mm.

In other embodiments, the FWI may be improved by at least 1 %, or at least 2%, or at least 3%, or at least 4%, or at least 5%, or at least 10%, or at least 15%, or at least 20% relative to, a polymer composition and/or polymer composite and/or article formed therefrom, comprising a comparable amount of talc particulate that comprises greater than 500 ppm of particles having a particle size of equal to or greater than 45 mm.

In certain embodiments, polymer compositions and/or polymer composites and/articles formed therefrom may be characterized in terms of a stiffness property, for example, flexural modulus. This property may be determined in accordance with the methods described in the Examples below. In certain embodiments, the polymer composition and/or polymer composite and/or article formed therefrom, comprising an amount of talc particulate (e.g., at least about 2 % by weight, or at least about 5 % by weight, or at least about 10 % by weight, or at least about 15 % by weight, or at least about 20 % by weight, or at least about 30 % by weight, or at least about 35 % by weight, or at least about 40 % by weight) may have a flexural modulus which is comparable to, or improved relative to, a polymer composition and/or polymer composite and/or article formed therefrom, comprising a comparable amount of talc particulate that comprises greater than 500 ppm of particles having a particle size of equal to or greater than 45 mm, for example, a comparable amount of a talc particulate that comprises greater than 1000 ppm of particles having a particle size of equal to or greater than 45 mm. For instance, in certain embodiments the flexural modulus may be improved by at least 1%, or at least 2%, or at least 3%, or at least 4%, or at least 5%, or at least 10%, or at least 15%, or at least 20% relative to, a polymer composition and/or polymer composite and/or article formed therefrom, comprising a comparable amount of talc particulate of the present invention.

The talc particulate maybe used to produce a polymer which is used as a food contact material (FCM).

For instance many foods already come into contact with specific machinery or cooking utensils during their manufacture or preparation.

Others are transported or stored in special containers.

For most of the foods on sale, the question of materials takes on importance at the very latest just before delivery to the retail trade.

Many foods are well packaged to protect them from dirt or germs and to extend the shelf life of fresh produce before finding their way to the retail outlets. In some cases packaging also offers additional protection against light and air, is the bearer of information or simply fulfils sales-promoting purposes.

Another area where FMCs can be found is in water pipes or other piping, which transports edible liquids, e.g. in coffee machines, beer dispensing equipment or vinification equipment.

Last, but not least can FMCs be found in the household, for example as food storage containers, cutlery, cups, plates, or any other kitchen utensil which may come in contact with food in particular for single-use applications.

Of course, the talc particulates of the present invention and polymers comprising said talc particulate may be used also in other environments where a migration of contaminants from the talc particulate and/or the polymers comprising said talc particulate needs to be avoided, such as for example medical environments (e.g. medical devices or therapeutic agents).

For the avoidance of doubt, the present invention also embraces the following subject-matter as defined in the following numbered paragraphs.

1. A talc particulate fulfilling food safety criteria characterized by an XRD morphology index (M) of between 0.95 and 0.999 and a $d_{[4,3]\text{-laser}}$ of between 6.6 and 15 μm.

2. The talc particulate of paragraph 1, wherein the XRD morphology index (M) is between 0.98 and 0.999.

3. The talc particulate of any of paragraphs 1 or 2, further characterized in having at least one of the following features:

   i. a specific surface area (BET) of from 6 to 25 $m^2/g$, preferably from 7.0 to 12 $m^2/g$; and/or

   ii. a CaO-content of less than 0.1 wt.-%; and/or

   iii. a lamellarity index of between 1.8 and 8.0; and/or

   iv. a $d_{50\text{-laser}}$ of between 3.2 and 14 μm, preferably 5.5 and 8.0 μm; and/or

vi. a $d_{80\text{-laser}}$ of less than 27 $\mu$m; and/or

vii. a $d_{98\text{-laser}}$ of less than 55 $\mu$m, preferably less than 20 $\mu$m; and/or

ix. a $d_{[4,3]\text{-laser}}$ of less than 14 $\mu$m, preferably more than 6.6 and preferably less than 10 $\mu$m; preferably more than 7.5 and preferably less than 8.5 $\mu$m;

x. a moisture content at 105°C (according to ISO 787/2) of less than 0.5 wt.-%; and/or

xii. a loss on Ignition at 1050°C (M.I. 93009) of less than 6.0 wt.-%; and/or

xi. the content of acid soluble substance in 1M HCl is less than 0.5 wt.-% preferably less than 0.3 wt.-%; and/or

x. a bulk density (according to EN 1097/3) of between 0.15 - 2 g/cm$^3$, preferably of between 0.25 - 1.5 g/cm$^3$.

4. The talc particulate according to any of the preceding paragraphs, having a content of below 0.3 wt.-%, more preferably of below 0.1 wt.-%, of at least one of the impurities selected from the list consisting of Ba, Co, Mn, Zn, Cu, Fe, Li, Al, Ni, Sb, Hg, As, Cr, Pb, Cd, La, Eu, Gd, K, Na and Tb.

5. The talc particulate of any of the previous paragraphs, wherein the talc particulate, when mixed with 40% (wt/wt) into a polymer, has a global-migration which is decreased by a factor of at least 15, as compared to $CaO_3$, when mixed with 40% (wt/wt) into a biopolymer, as measured in a standardized global migration test at 3% acetic acid at 40°C for 10 days.

6. The talc particulate of any of the previous paragraphs, wherein the talc particulate, when mixed with 40% (wt/wt) into a polymer, has a global-migration is less than 50 mg/dm$^2$ in a global-migration test in 3% acetic acid at 40°C for 10 days, and/or has a relative Mg-migration of less than 22 mg/kg as measured in a standardized Mg-migration test in 3% acetic acid at 40°C for 10 days; and/or has a relative Ca-migration of less than 40 mg/kg as measured in a standardized Ca-migration test in 3% acetic acid at 40°C for 10 days.

7. The talc particulate of any of the previous paragraphs, wherein the biopolymer is selected from polybutylene succinate (PBS), polylactide (PLA), thermoplastic starch (TPS), polybutylenadipat-terephthalate (PBAT), polycaprolacton (PCL) and/or polyhydroxyalkanoate (PHA).

8. The talc particulate of any of the previous paragraphs, wherein the talc particulate, when mixed with 40% (wt/wt) into polybutylene succinate (PBS), has a global migration of less than 9 mg/kg as measured in a standardized global migration test in 3% acetic acid at 70°C for 2 hours, and/or has a relative $Mg^{2+}$-migration of less than 5 mg/kg as measured in a standardized $Mg^{2+}$-migration test in 3% acetic acid at 70°C for 2 hours, and/or has a relative $Ca^{2+}$-migration of less than 40 mg/kg as measured in a standardized $Ca^{2+}$-migration test in 3% acetic acid at 70°C for 2.

9. The talc particulate of any of the previous paragraphs, wherein the talc particulate, when mixed with 40% (wt/wt) into a biopolymer results in at least one of the following properties:

i. the flexural modulus is increased by a factor of at least 4 as compared to the same polymer without the talc particulate; and/or

ii. the specific gravity is increased by 20% as compared to the same polymer without the talc particulate; and/or

iii. the melt volume rate (MVR) is reduced by at least 30% as compared to the same polymer without the talc particulate; and/or

iv. the shrinkage is reduced by a factor of 2.5 as compared to the same polymer without the talc particulate; and/or

v. the VICAT is increased as compared to the same polymer without the talc particulate; and/or

vi. the HDT (@ 1820 kPa) is increased as compared to the same polymer without the talc particulate.

10. A method for preparing a talc particulate according to paragraph 1, comprising at least as a first step subjecting

the coarse talc particulate passing through a 500 μm screen to a froth flotation:

i.) milling the coarse talc in a mill, preferably a roller mill, to a PSD passing through a 500 μm screen in order to reach the optimum liberation size;

ii.) disperse the powder in water to for a suspension of a final concentration below 20%wt;

iii.) the suspension is subjected to flotation cells;

iv.) the froth is recovered and subjected to a thickener in order to increase the solid content to a concentration higher than the one of the froth;

v.) the concentrated talc slurry is subjected to a filter-press or a centrifuge in order to remove residual moisture below 20% thereby producing filter-cakes;

vi.) the filter-cakes are further dried to a coarse dry powder.

11. The method for preparing a talc particulate according to paragraph 10, comprising at least as a second step subjecting the coarse dry powder of step vi.) to a wet-milling method comprising at least the steps:

i.) mill the coarse dry powder in a roller mill in order to obtain a talc powder;

ii.) disperse the talc powder in water;

iii.) delaminate the talc-suspension by wet milling;

iv.) (optionally) classify the talc-suspension by hydro-cyclones;

v.) (optionally) concentrate the talc-suspension in a centrifuge and/or filter-press;

vi.) dry the talc particulate to a residual moisture of less than 0.5%.

12. The method for preparing a talc particulate according to paragraphs 10 or 11, comprising at least as a second step subjecting the coarse dry powder of step vi.) to a dry-milling method comprising at least the steps:

i.) mill the coarse dry powder in a roller mill;

ii.) jet-mill micronizing to the final PSD ;

iii.) pass the suspension through a die to produce wet pellets;

iv.) dry wet pellets to a residual moisture of less than 0.5%.

13. A polymer comprising the talc particulate of any of the paragraphs 1 to 9, or obtained by the methods of paragraphs 10 to 12, as a filler.

14. The polymer of paragraphs 13 selected from polybutylene succinate (PBS), polylactide (PLA), thermoplastic starch (TPS), polybutylenadipat-terephthalate (PBAT), polycaprolacton (PCL) and/or polyhydroxyalkanoate (PHA).

15. Use of the of talc particulate according any one of paragraphs 1 to 9, or obtained by the methods of paragraphs 10 to 12, or a polymer according to any of paragraphs 13 to 14, wherein the talc and or polymer is intended to come into contact with food, or for the production of an article made of food contact materials (FCMs).

Short description of the figures

Figure 1 Depiction of the different polymer-groups. On can differentiate the known poly-mers by their source ("bio-

based", e.g. renewable raw-materials, vs. fossil-based) and their biodegradability (e.g. defined accordingly to the criteria for the industrial compostability of packaging as set out in the European standard EN 13432. EN 13432 requires the compostable plastics to disintegrate after 12 weeks and com-pletely biodegrade after six months. That means that 90 percent or more of the plastic material will have been converted to $CO_2$.)

Figure 2 Depiction of the "stiffness"-test of the polymer resin with different filler materials. The effect of a functional filler such as talc is visible in the strong rigidity increase of modified resin. The test was performed according to ISO 178.

Figure 3 Depiction of the "toughness"-test of the polymer resin with different filler materials. In figure 3 an "un-notched IZOD"-test was performed according to ISO 180/1. On PBAT talc shows a reinforcing effect, while on both PBS and PLA, the presence of mineral fillers reduces the material toughness.

Figure 4 Depiction of another "toughness"-test of the polymer resin with different filler materials. In figure 4 a "notched IZOD"-test was performed according to ISO 180/1. On both PBAT and PLA talc shows a reinforcing effect, while on both PBS the presence of mineral fillers reduces the material toughness.

Figure 5 Depiction of "specific gravity"-test of the polymer resin with different filler materials. The presence of mineral fillers increases the initial resin's specific gravity. The test was performed according to ISO 1183.

Figure 6 Depiction of "fluidity"-test of the polymer resin with different filler materials. "MVR" is the abbreviation for "Melt Volume Rate" measured at 190°C. Fluidity of mineral filled polymers tends to decrease. The high value recorded on PLA modified with $CaCO_3$ likely shows a degradative effect observed on the resin during processing. The test was performed according to ISO 1133. Low MVR is advantageous.

Figure 7 Depiction of "shrinkage"-test of the polymer resin with different filler materials. The presence of a mineral filler on polymers reduces (improves) molding shrinkage. The test was performed according to an internal method. The length difference of a 120mm test bar after 48h @ 23°C was compared with the mold cavity size. The shrinkage is depicted as a percentage as compared to the mold cavity size. Low shrinkage is advantageous.

Figure 8 Depiction of "vicat"-test of the polymer resin with different filler materials. Vicat softening temperature or vicat hardness is the determination of the softening point for materials that have no definite melting point, such as plastics. It is taken as the temperature at which the specimen is penetrated to a depth of 1 mm by a flat-ended needle with a 1 mm2 circular or square cross-section. For the Vicat 1N test, a load of 1 N is used. For the Vicat 49 test, the load is 49N. The test was performed according to standard ISO 306. The presence of mineral filler helps to increase vicat temperature in the resins. Higher vicat values are advantageous, since the food contact material (FCM) remains stable also at higher temperatures (important for example for hot beverages or microwave plates).

Figure 9 Depiction of "HDT"-test (Heat Distortion Temperature) of the polymer resin with different filler materials. The test was performed according to standard ISO 75. The presence of mineral filler does increase the HDT temperature and functional filler as talc shows its better contribution to it. Higher HDT values are advantageous, since the food contact material (FCM) remains stable also at higher temperatures (important for example for hot beverages or microwave plates).

Figure 10 Depiction of "Global migration"-test of the polymer resin with different filler materials (see also example 5 and tables 1 and 2). The test was performed at different durations and different temperatures under 3% acetic acid conditions. The "global migration" is measured as the loss of matter per exposed surface, thus it is depicted in $mg/dm^2$. Inventive talc 2 shows significant lower global migration values versus the other fillers at same test conditions in all the resins. A lower global migration under acetic acid conditions is advantageous, since certain foods comprise a low pH which can solubilize elements from the polymeric resin. Thus, for food contact material (FCM) polymers only fillers with low global migration under acetic acid conditions are suitable. In some cases regulations will not even permit polymers with fillers which show a global migration under acetic acid and/or at low pH conditions above a certain threshold level.

Figure 11 Depiction of "Mg-migration"-test of the polymer resin with different filler materials (see also example 5 and tables 1 and 2). The test was performed at different durations and different temperatures under 3% acetic

acid conditions. The "Mg-migration" is measured as the loss of mass per total mass, thus it is depicted in mg/kg. The lower soluble matter present in inventive talc 2 allows to record low magnesium migration under same test conditions. A lower Mg-migration under acetic conditions is advantageous, since certain foods comprise low pH which can solubilize Mg from the polymeric resin. Thus, for food contact material (FCM) polymers only fillers with low Mg-migration under acetic acid conditions are suitable. In some cases regulations will not even permit polymers with fillers which show a Mg-migration under acetic acid and/or at low pH conditions above a certain threshold level.

Figure 12 Depiction of "Ca-migration"-test of the polymer resin with different filler materials (see also example 5 and tables 1 and 2). The test was performed at different durations and different temperatures under 3% acetic acid conditions. The "Ca-migration" is measured as the loss of mass per total mass, thus it is depicted in mg/kg. The presence of calcium carbonate determines a massive migration of calcium while with talc2 it can be minimized. A lower Ca -migration under acetic conditions is advantageous, since certain foods comprise low pH which can solubilize Ca from the polymeric resin. It is also an indicator of the migration of other elements. Thus, for food contact material (FCM) polymers only fillers with low Ca-migration under acetic acid conditions are suitable. In some cases regulations will not even permit polymers with fillers which show a Ca-migration under acetic acid and/or at low pH conditions above a certain threshold level.

Figure 13 Migration data for Mg and Ca in PBS, PBAT and PLA. "10 gg" refers to 10 days.

Figure 14 Migration data (or the absence thereof) of a number of other elements. "10 gg" refers to 10 days.

Examples

**Example 1: Production of the inventive talc particulate**

The inventive talc particulate can be produced by micronizing it in a dry process (jet-milling) or by wet milling:
The process comprises the following steps:
Mining step the talc-rich rock is mined, washed and crushed.

- Froth Flotation:

    ◦ The crushed ore is milled by a roller mill to a relative coarse powder, passing through a 500 μm screen, to reach the optimum liberation size of the minerals present. The state of the art technology uses impact mills like ball mills, rod mills or hammer mills or similar to reduce the size of the rock. Surprisingly, at this early stage of the process, the use of a mill, like the roller mill, that reduce the size by compression of the rock, instead of by impact, permits to preserve a higher lamellarity and high crystallinity of talc. This permits to have a more efficient froth flotation, because the hydrophobic surfaces of talc lamellae have a greater extension, obtaining a mineral having a purity suitable for the invention and able to reach the high morphology indexes requested to optimize the mechanical properties of the final polymer.

    ◦ The powder is dispersed in water (slurry) to obtain a diluted suspension, with a solid content percentage around 5% by weight.

    ◦ The slurry goes through flotation cells; talc is concentrate in the froth; impurities, carbonates and quartz mainly) sink in the water; the froth is removed and the remaining material goes through other cells, to optimize the recovery of talc in the process.

    ◦ The recovered talc goes in a thickener, to increase the solid content and then to a filter-press, to remove as much water as possible (residual moisture around 12%), producing "filter-cakes"

    ◦ The "filter-cakes" go to a drier, getting dry coarse powder at high purity (talc >95% or more) and high lamellar talc.

- The coarse powder is used to feed:

    ◦ A roller mill that produces a powder having a $D_{4,3\text{-laser}}$ of 20 - 22 μm. Even in this stage, in order to preserve the lamellarity, a roller mill is used instead of the impact mills. This relatively coarse powder is used to feed the jet-mill micronizers;

◦ Jet-mill micronizer to the final PSD

- The fine powder is blended with water, passed to a press and a die to produce wet pellets, that are dried to a residual moisture <0.5%. This step to increase the bulk density from 0.15 - 0.20 g/cm$^3$ to 0.7 - 1.3 g/cm$^3$.

The product is packed in big bag, paper sacks or sent to a silo to be shipped in bulk.

- In case of wet-milling, the powder produced by the roller mill is dispersed in water with a solid concentration between 20% and 60% (talc slurry)

◦ The slurry is delaminated by using wet mills to a D4,3 around 14 μm
Optionally the slurry could be further diluted to a solid concentration around 10 - 15%wt to be processed by hydro cyclones; this step can remove the coarsest particles that could be sent back to a further milling stage. In the case this step is used, it could be advisable to remove part of the water by centrifuge or filter-press before to dry talc.

◦ Drying by spray-drying or flesh drier or other methods to a residual moisture below 0.5%wt.

**Example 2: Comparison of some physical properties of conventional talc particulate ("talc 1") vs. inventive talc particulate ("talc 2")**

The comparison of physical properties between conventional comparative talc usually used as a filler in polymers, denoted as "talc 1", were compared with the talc particulate of the present invention, denoted as "talc 2" in table 1.

**Table 1: Physical properties of comparative talc 1 vs. inventive talc 2**

| | **Talc 1** | **Talc 2** |
|---|---|---|
| Dolomite content | 4% | < 1% |
| $d_{[4,3]}$ | 6.5 | 6.7 |
| $d_{50\text{-laser}}$ | 5.8 μm | 6.0 μm |
| $d_{98\text{-laser}}$ | 15.4 μm | 16.5 μm |
| Specific surface (B.E.T.) (DIN 66131/2) | 8.5 m$^2$/g | 10 m$^2$/g |
| Aspect ratio | 2.4 | 2.6 |
| XRD-morphology index | about 0.94.2 (94,9%) | about 0.983 (98,3%) |
| MgO | 31.5% | 32.0% |
| $Fe_2O_3$ | 0.4 % | < 0.1 % |
| $Al_2O_3$ | 0.4 % | 0.3 % |
| CaO | 0.3 % | < 0.1 % |
| Loss on Ignition at 1050°C | 6.5% | 5.2% |
| Acid Soluble Substances (HCl 1N) | 3.5% | 0.5% |

**Example 3: Mechanical and physical characterization**

A number of mechanical tests were performed according to ISO standards.

- Flexural → ISO 527
- Impact IZOD → ISO 178
- Density → ISO 1183
- Fluidity → ISO 1133
- Molding shrinkage → internal method (machine direction)

The results are depicted in the figures.

The talc particulate of the invention (talc 2) shows a clear better behavior in terms of both mechanical (Stiffness) properties versus standard talc typically used in such applications (talc 1).

**Example 4: Thermal properties**

A number of thermal properties were measured according to ISO standards:

- Heat distortion temperature → ISO 75
- Vicat temperature → ISO 306
- Differential scanning calorimetry → ISO 11357

The results are depicted in figures 8 - 13.

Talc confirms its clear superiority in terms of mechanical properties versus calcium carbonate. The talc particulate of the invention (talc 2) shows a clear better behavior in terms of thermal (HDT) properties versus standard talc typically used in such applications (talc 1).

**Example 5: Migration tests**

Test performed on thin plastic disks into simulant B (acetic acid 3% w/v) according to Regulation (EU) 10/2011.

Test conditions: Being PBS the only resin that can resist at 70°C without decomposing, PBS samples were tested at such more stringent condition (2h @ 70°C). All the other samples were tested at 40°C (10 days).

The limits in the graphs are set by the above-mentioned regulation for food contact applications.

Figures 10 to 14 show the results of the migration tests in tables: Figure 10 shows the global migration, figures 11 - 12 show the migration of Mg and Ca. Figure 13 shows the summary of migration data for Mg and Ca in PBS, PBAT and PLA. Figure 14 shows the summary of migration data of a number of other elements in PBS, PBAT and PLA. "10 gg" refers to 10 days in each of the figures.

It was surprisingly found that the inventive talc 2 shows less migration of Ca and Mg as compared to conventional talc 1 or $CaCO_3$. This is an important finding, since polymers for food contact material (FCM) are only allowed to be marketed in certain jurisdictions if the migration of certain elements, especially Ca and Mg, is below a threshold level (in EU for example below 60 mg/kg).

**Claims**

1. A talc particulate fulfilling food safety criteria **characterized by** an XRD morphology index (M) of between 0.95 and 0.999 and a $d_{[4,3]\text{-laser}}$ of between 6.6 and 15 μm.

2. The talc particulate of claim 1, wherein the XRD morphology index (M) is between 0.98 and 0.999.

3. The talc particulate of any of claims 1 or 2, further **characterized in** having at least one of the following features:

   i. a specific surface area (BET) of from 6 to 25 $m^2/g$, preferably from 7.0 to 12 $m^2/g$; and/or
   ii. a CaO-content of less than 0.1 wt.-%; and/or
   iii. a lamellarity index of between 1.8 and 8.0; and/or
   iv. a $d_{50\text{-laser}}$ of between 3.2 and 14 μm, preferably 5.5 and 8.0 μm; and/or
   vi. a $d_{80\text{-laser}}$ of less than 27 μm; and/or
   vii. a $d_{98\text{-laser}}$ of less than 55 μm, preferably less than 20 μm; and/or
   ix. a $d_{[4,3]\text{-laser}}$ of less than 14 μm, preferably more than 6.0 and less than 14 μm; preferably more than 6.6 and less than 10 μm, preferably more than 6.7 and less than 8.5 μm; and/or
   x. a moisture content at 105°C (according to ISO 787/2) of less than 0.5 wt.-%; and/or
   xii. a loss on Ignition at 1050°C (M.I. 93009) of less than 6.0 wt.-%; and/or
   xi. the content of acid soluble substance in 1M HCl is less than 0.5 wt.-% preferably less than 0.3 wt.-%; and/or
   x. a bulk density (according to EN 1097/3) of between 0.15 - 2 $g/cm^3$, preferably of between 0.25 - 1.5 $g/cm^3$.

4. The talc particulate according to any of the preceding claims, having a content of below 0.3 wt.-%, more preferably of below 0.1 wt.-%, of at least one of the impurities selected from the list consisting of Ba, Co, Mn, Zn, Cu, Fe, Li, Al, Ni, Sb, Hg, As, Cr, Pb, Cd, La, Eu, Gd, K, Na and Tb.

**5.** The talc particulate of any of the previous claims, wherein the talc particulate, when mixed with 40% (wt/wt) into a polymer, has a global-migration (as measured as a loss of mass per surface) which is decreased by a factor of at least 15, as compared to $CaO_3$, when mixed with 40% (wt/wt) into a biopolymer, as measured in a standardized global migration test at 3% acetic acid at 40°C for 10 days.

**6.** The talc particulate of any of the previous claims, wherein the talc particulate, when mixed with 40% (wt/wt) into a polymer, has a global-migration is less than 50 mg/$dm^2$ in a global-migration test in 3% acetic acid at 40°C for 10 days, and/or has a relative Mg-migration of less than 22 mg/kg as measured in a standardized Mg-migration test in 3% acetic acid at 40°C for 10 days; and/or has a relative Ca-migration of less than 40 mg/kg as measured in a standardized Ca-migration test in 3% acetic acid at 40°C for 10 days.

**7.** The talc particulate of any of the previous claims, wherein the biopolymer is selected from polybutylene succinate (PBS), polylactide (PLA), thermoplastic starch (TPS), polybutylenadipat-terephthalate (PBAT), polycaprolacton (PCL) and/or polyhydroxyalkanoate (PHA).

**8.** The talc particulate of any of the previous claims, wherein the talc particulate, when mixed with 40% (wt/wt) into polybutylene succinate (PBS), has a global migration of less than 9 mg/kg as measured in a standardized global migration test in 3% acetic acid at 70°C for 2 hours, and/or has a relative $Mg^{2+}$-migration of less than 5 mg/kg as measured in a standardized $Mg^{2+}$-migration test in 3% acetic acid at 70°C for 2 hours, and/or has a relative $Ca^{2+}$-migration of less than 40 mg/kg as measured in a standardized $Ca^{2+}$-migration test in 3% acetic acid at 70°C for 2.

**9.** The talc particulate of any of the previous claims, wherein the talc particulate, when mixed with 40% (wt/wt) into a biopolymer results in at least one of the following properties:

i. the flexural modulus is increased by a factor of at least 4 as compared to the same polymer without the talc particulate; and/or
ii. the specific gravity is increased by 20% as compared to the same polymer without the talc particulate; and/or
iii. the melt volume rate (MVR) is reduced by at least 30% as compared to the same polymer without the talc particulate; and/or
iv. the shrinkage is reduced by a factor of 2.5 as compared to the same polymer without the talc particulate; and/or
v. the VICAT is increased as compared to the same polymer without the talc particulate; and/or
vi. the HDT (@ 1820 kPa) is increased as compared to the same polymer without the talc particulate.

**10.** A method for preparing a talc particulate according to claim 1, comprising at least as a first step subjecting the coarse talc particulate passing through a 500 μm screen to a froth flotation:

i.) milling the coarse talc in a mill, preferably a roller mill, to a PSD passing through a 500 μm screen in order to reach the optimum liberation size;
ii.) disperse the powder in water to for a suspension of a final concentration below 20%wt;
iii.) the suspension is subjected to flotation cells;
iv.) the froth is recovered and subjected to a thickener in order to increase the solid content to a concentration higher than the one of the froth;
v.) the concentrated talc slurry is subjected to a filter-press or a centrifuge in order to remove residual moisture below 20% thereby producing filter-cakes;
vi.) the filter-cakes are further dried to a coarse dry powder.

**11.** The method for preparing a talc particulate according to claim 10, comprising at least as a second step subjecting the coarse dry powder of step vi.) to a wet-milling method comprising at least the steps:

i.) mill the coarse dry powder in a roller mill in order to obtain a talc powder;
ii.) disperse the talc powder in water;
iii.) delaminate the talc-suspension by wet milling;
iv.) (optionally) classify the talc-suspension by hydro-cyclones;
v.) (optionally) concentrate the talc-suspension in a centrifuge and/or filter-press;
vi.) dry the talc particulate to a residual moisture of less than 0.5%.

**12.** The method for preparing a talc particulate according to claims 10 or 11, comprising at least as a second step subjecting the coarse dry powder of step vi.) to a dry-milling method comprising at least the steps:

i.) mill the coarse dry powder in a roller mill;
ii.) jet-mill micronizing to the final PSD ;
iii.) pass the suspension through a die to produce wet pellets;
iv.) dry wet pellets to a residual moisture of less than 0.5%.

**13.** A polymer comprising the talc particulate of any of the claims 1 to 9, or obtained by the methods of claims 10 to 12, as a filler.

**14.** The polymer of claims 13 selected from polybutylene succinate (PBS), polylactide (PLA), thermoplastic starch (TPS), polybutylenadipat-terephthalate (PBAT), polycaprolacton (PCL) and/or polyhydroxyalkanoate (PHA).

**15.** Use of the of talc particulate according any one of claims 1 to 9, or obtained by the methods of claims 10 to 12, or a polymer according to any of claims 13 to 14, wherein the talc and or polymer is intended to come into contact with food, or for the production of an article made of food contact materials (FCMs).

Figure 1

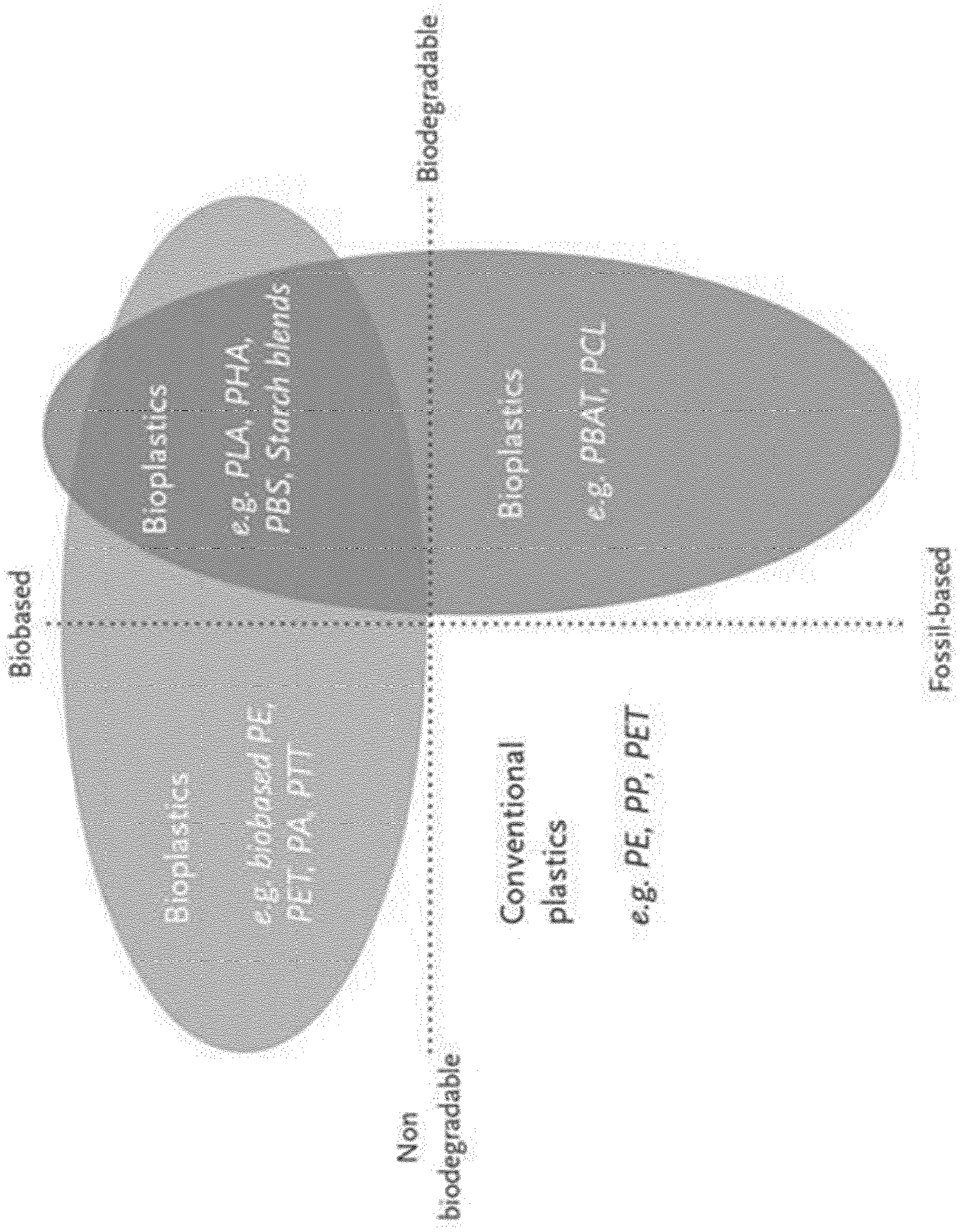
Biodegradable
Biobased
Fossil-based
Non biodegradable
Bioplastics
e.g. PLA, PHA, PBS, Starch blends
Bioplastics
e.g. PBAT, PCL
Bioplastics
e.g. biobased PE, PET, PA, PTT
Conventional plastics
e.g. PE, PP, PET

Figure 2

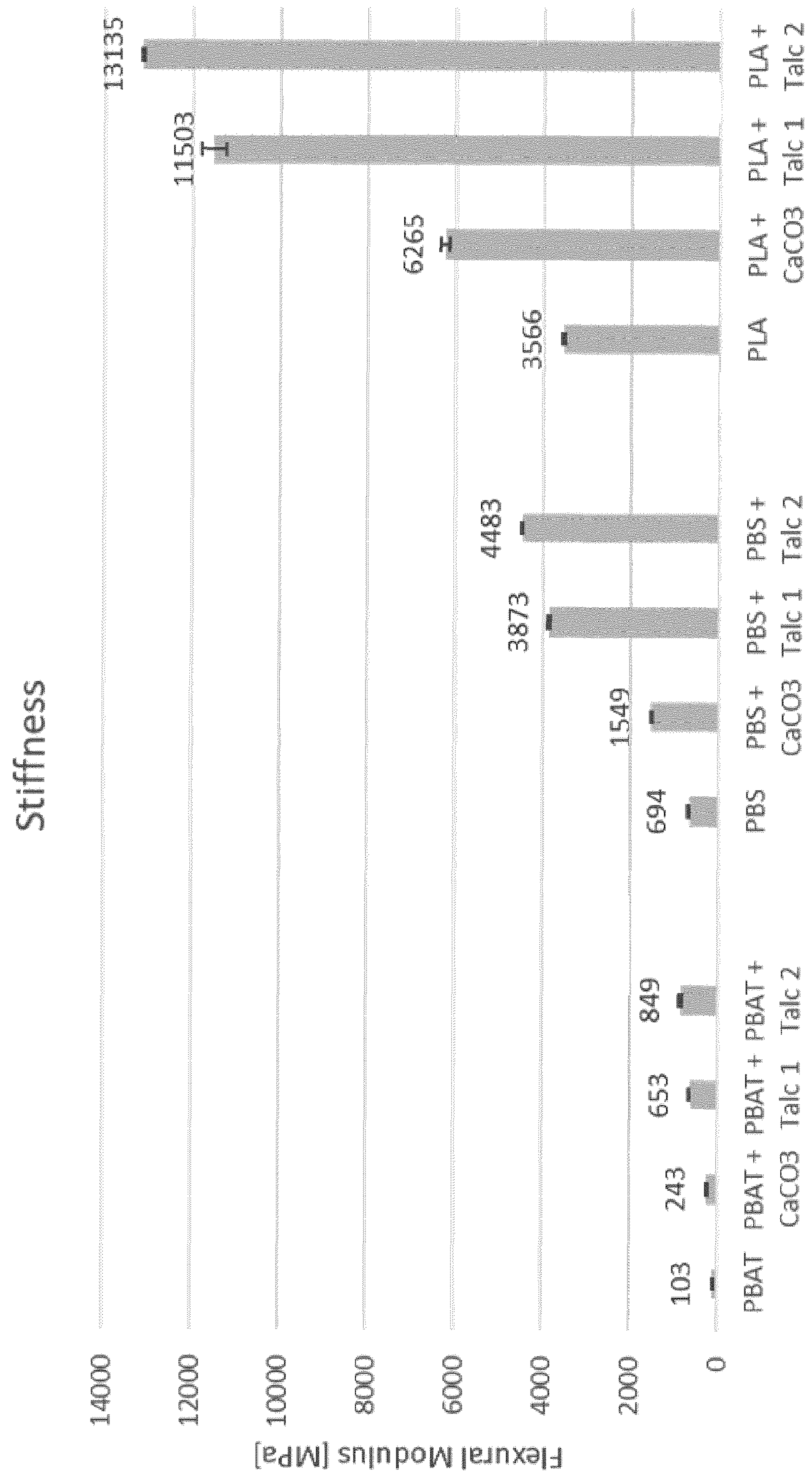
Stiffness
Flexural Modulus [MPa]
14000
12000
10000
8000
6000
4000
2000
0
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2
103
243
653
849
694
1549
3873
4483
3566
6265
11503
13135

Figure 3

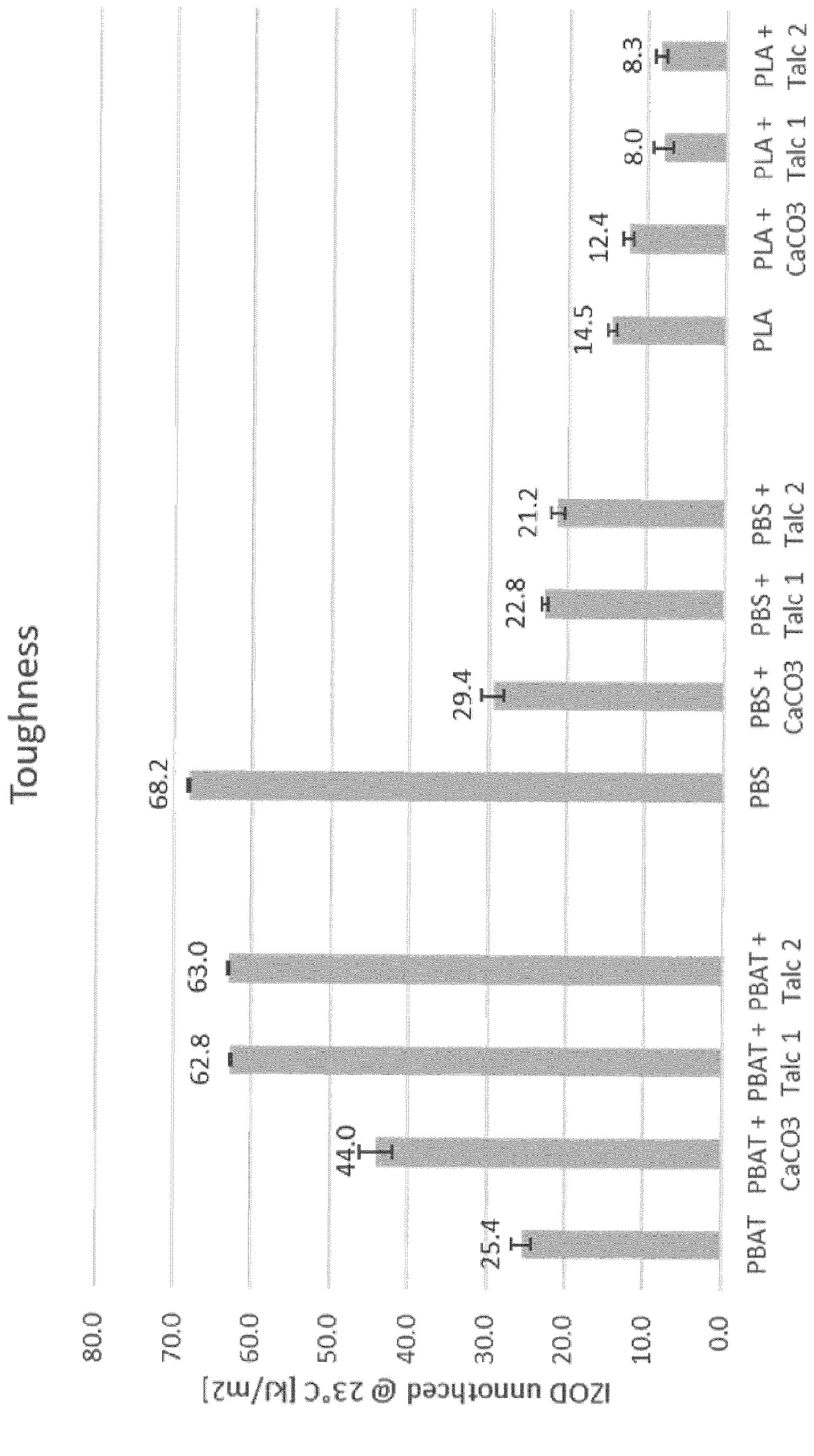
Toughness
IZOD unnothced @ 23°C [kJ/m2]
80.0
70.0
60.0
50.0
40.0
30.0
20.0
10.0
0.0
25.4
44.0
62.8
63.0
68.2
29.4
22.8
21.2
14.5
12.4
8.0
8.3
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2

Figure 4

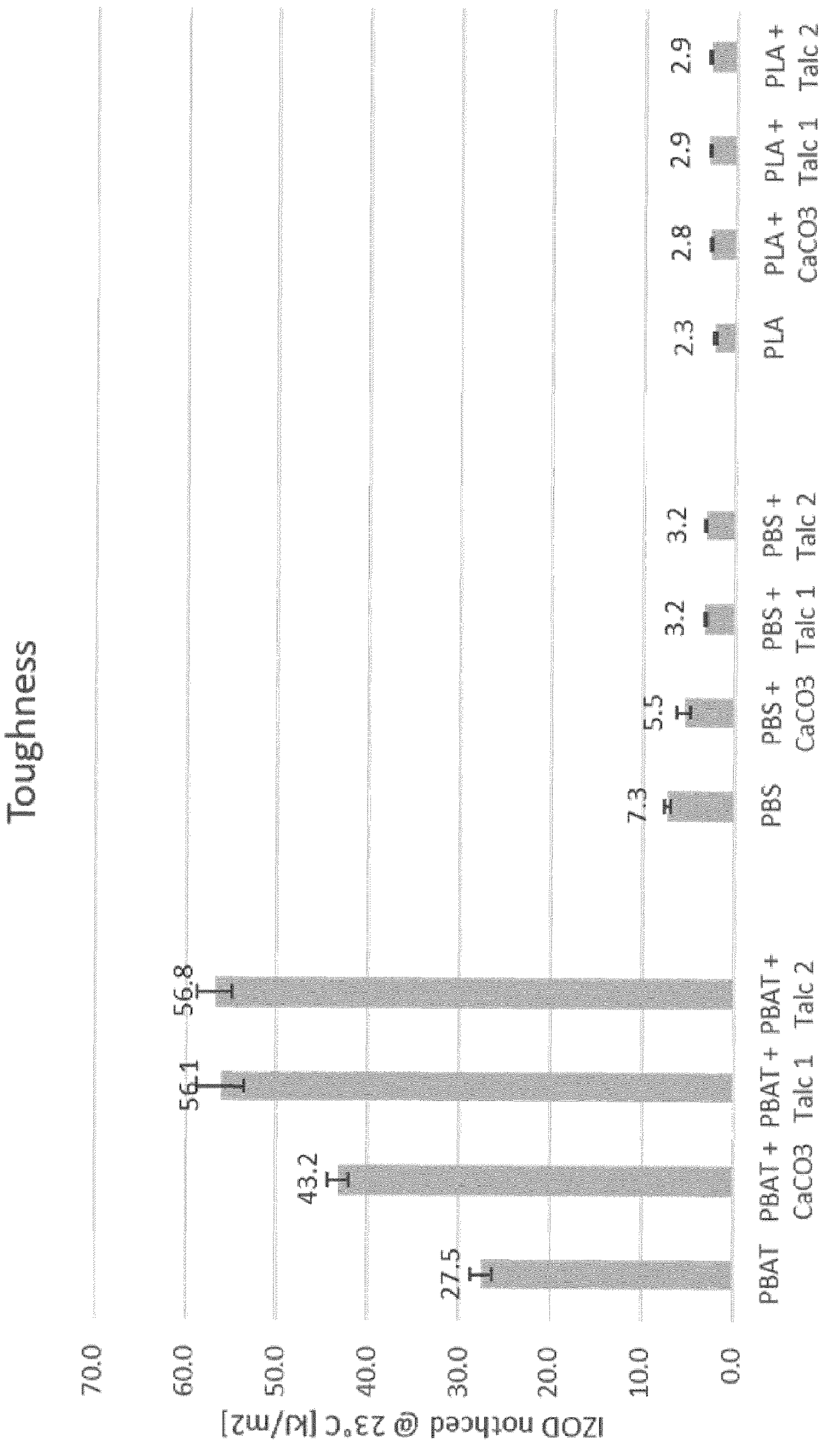

Toughness
IZOD notched @ 23°C [kJ/m2]
70.0
60.0
50.0
40.0
30.0
20.0
10.0
0.0
27.5
43.2
56.1
56.8
7.3
5.5
3.2
3.2
2.3
2.8
2.9
2.9
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2

Figure 5

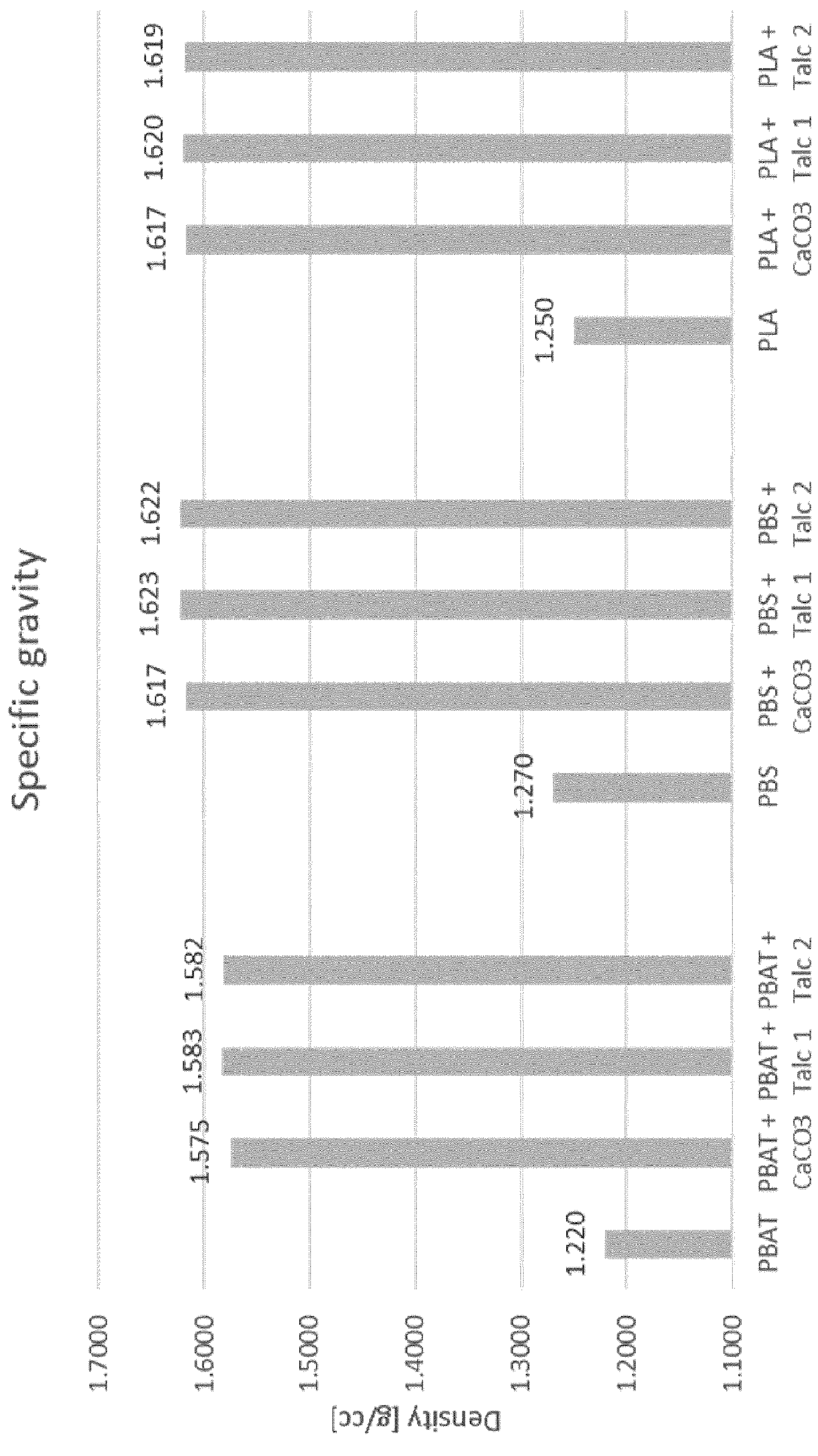
Specific gravity
Density [g/cc]
1.7000
1.6000
1.5000
1.4000
1.3000
1.2000
1.1000
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2
1.220
1.575
1.583
1.582
1.270
1.617
1.623
1.622
1.250
1.617
1.620
1.619

Figure 6

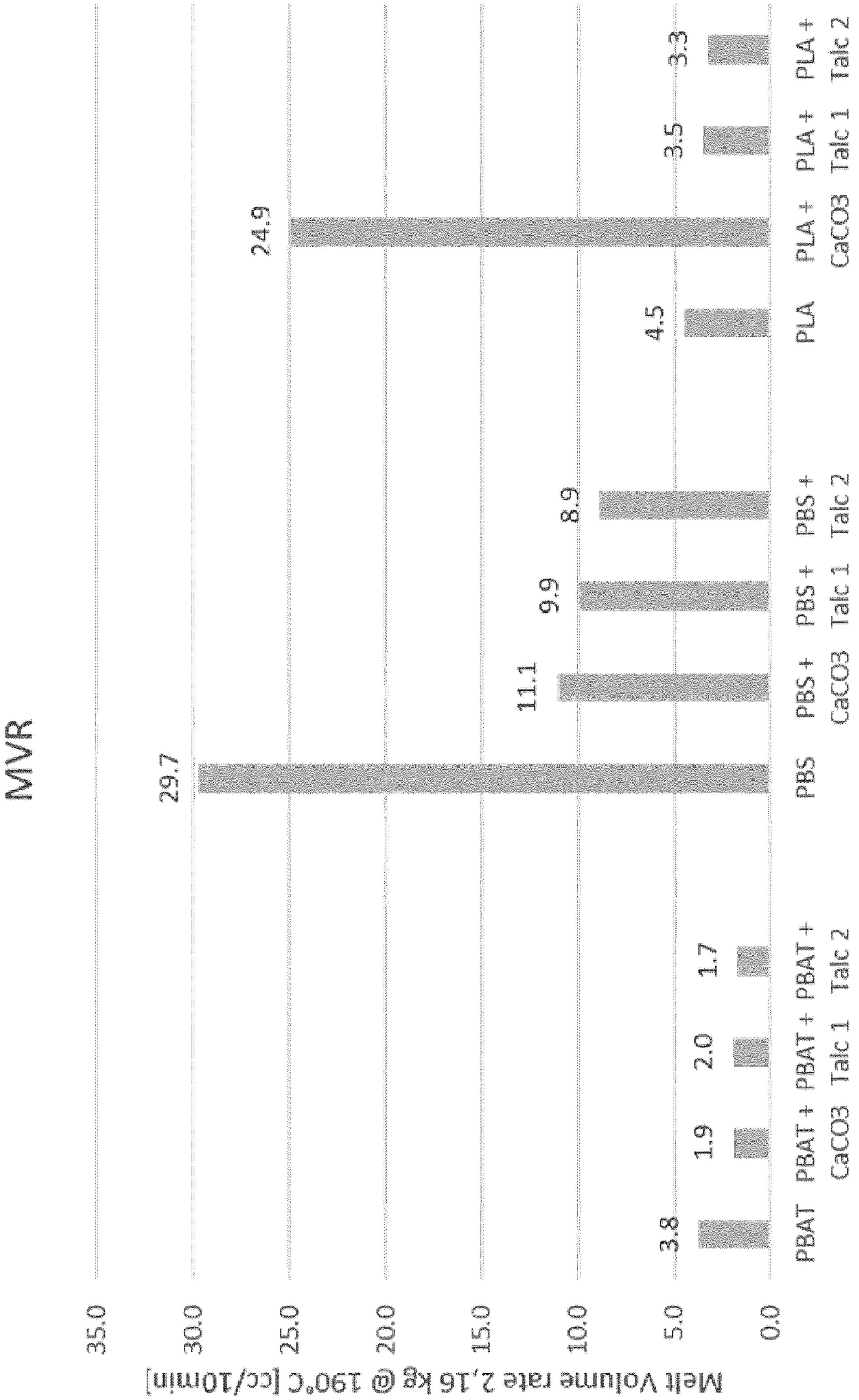
MVR
Melt Volume rate 2,16 kg @ 190°C [cc/10min]
35.0
30.0
25.0
20.0
15.0
10.0
5.0
0.0
3.8
1.9
2.0
1.7
29.7
11.1
9.9
8.9
4.5
24.9
3.5
3.3
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2

Figure 7

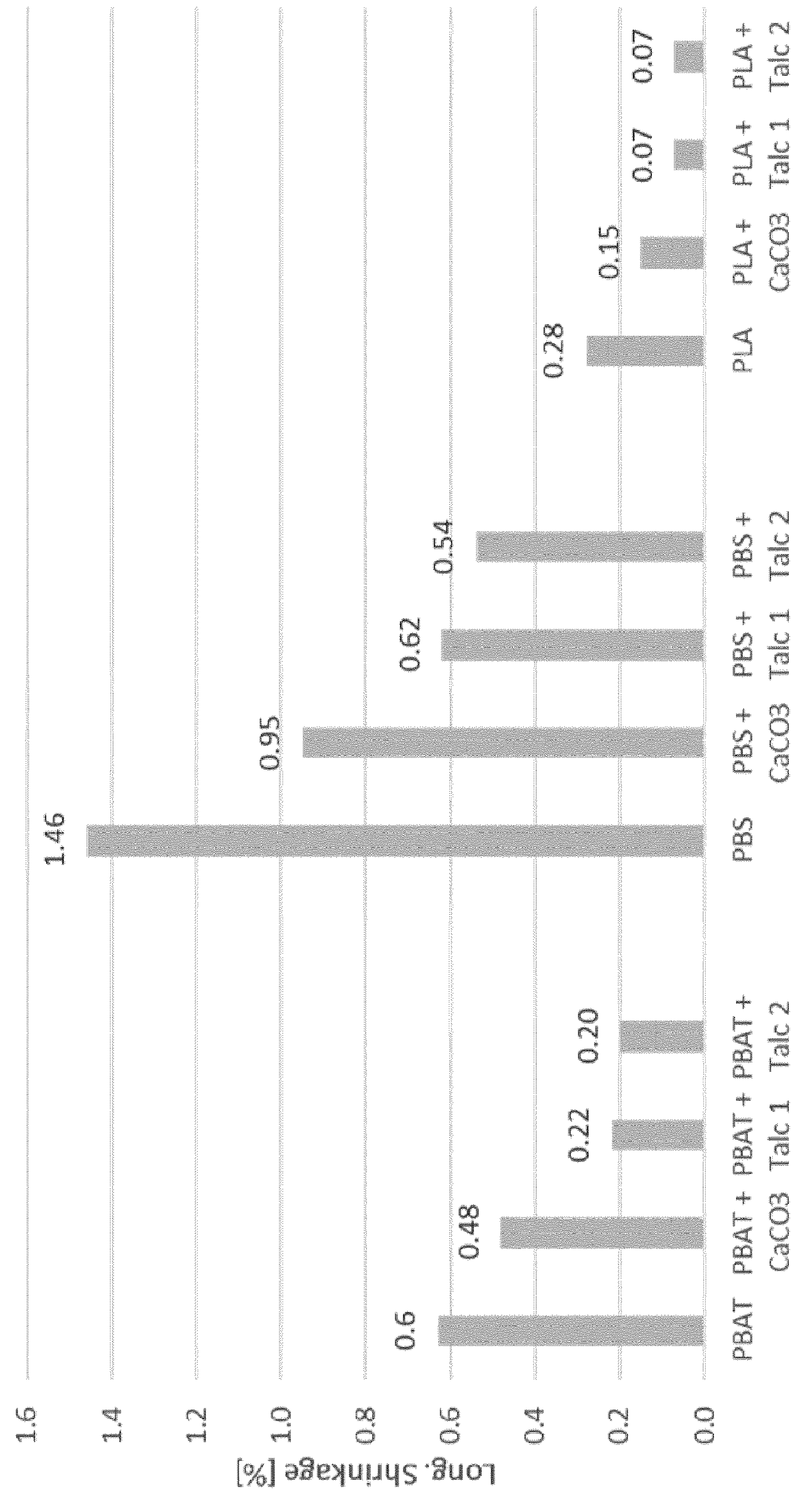
Shrinkage
Long. Shrinkage [%]
0.0
0.2
0.4
0.6
0.8
1.0
1.2
1.4
1.6
0.6
0.48
0.22
0.20
1.46
0.95
0.62
0.54
0.28
0.15
0.07
0.07
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2

Figure 8

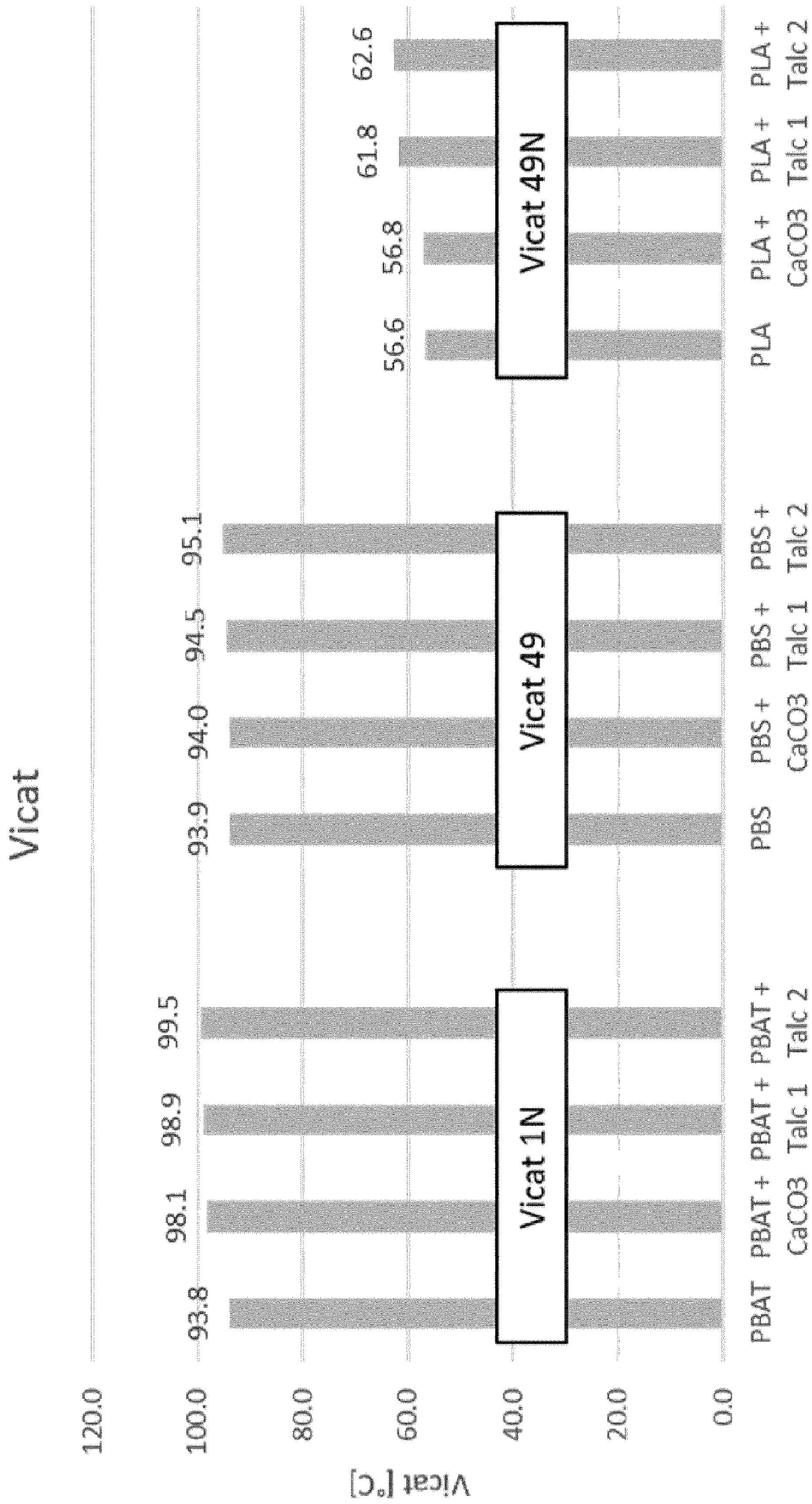
Vicat
Vicat [°C]
120.0
100.0
80.0
60.0
40.0
20.0
0.0
Vicat 1N
Vicat 49
Vicat 49N
93.8
98.1
98.9
99.5
93.9
94.0
94.5
95.1
56.6
56.8
61.8
62.6
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2

Figure 9

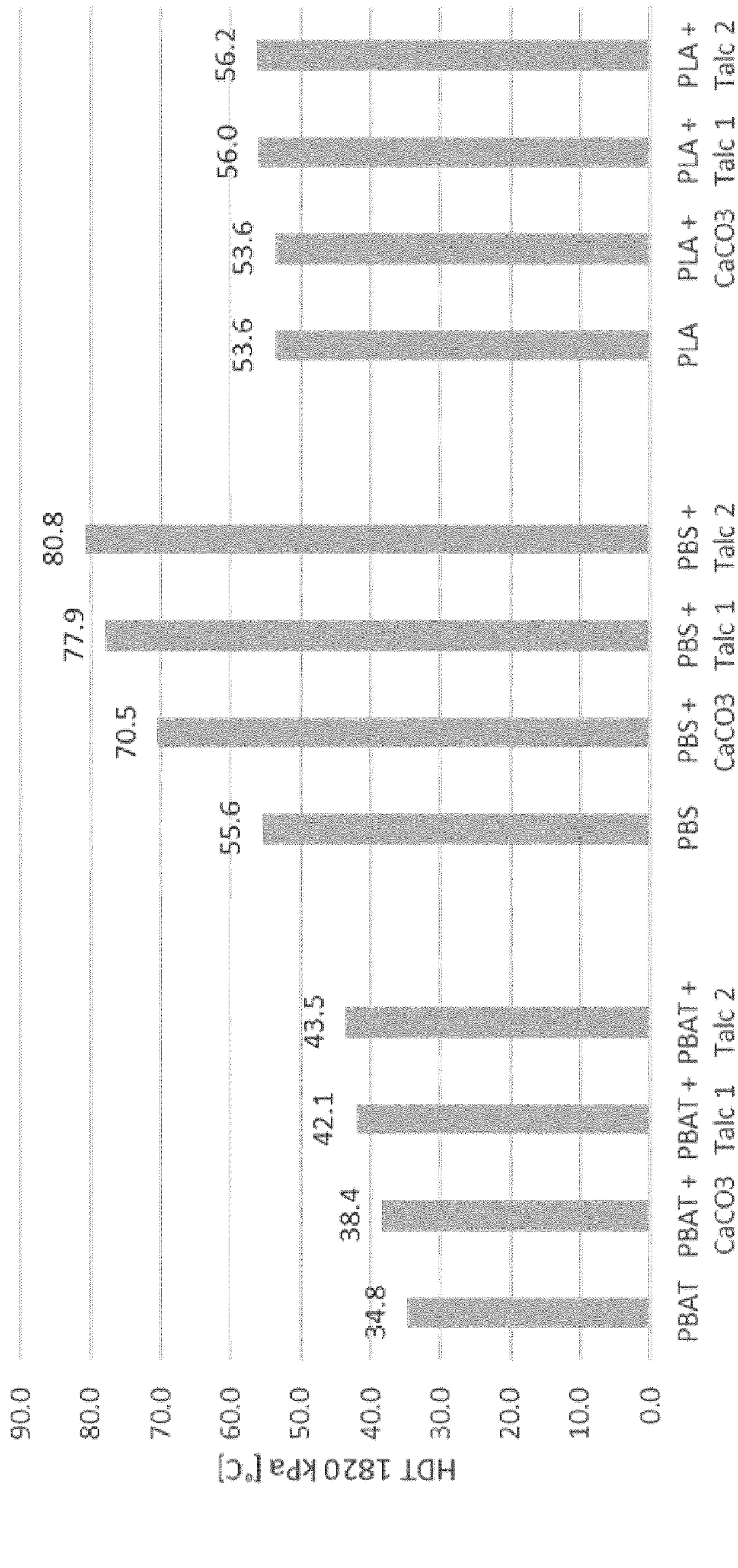
HDT
HDT 1820 kPa [°C]
0.0
10.0
20.0
30.0
40.0
50.0
60.0
70.0
80.0
90.0
PBAT
34.8
PBAT + CaCO3
38.4
PBAT + Talc 1
42.1
PBAT + Talc 2
43.5
PBS
55.6
PBS + CaCO3
70.5
PBS + Talc 1
77.9
PBS + Talc 2
80.8
PLA
53.6
PLA + CaCO3
53.6
PLA + Talc 1
56.0
PLA + Talc 2
56.2

Figure 10

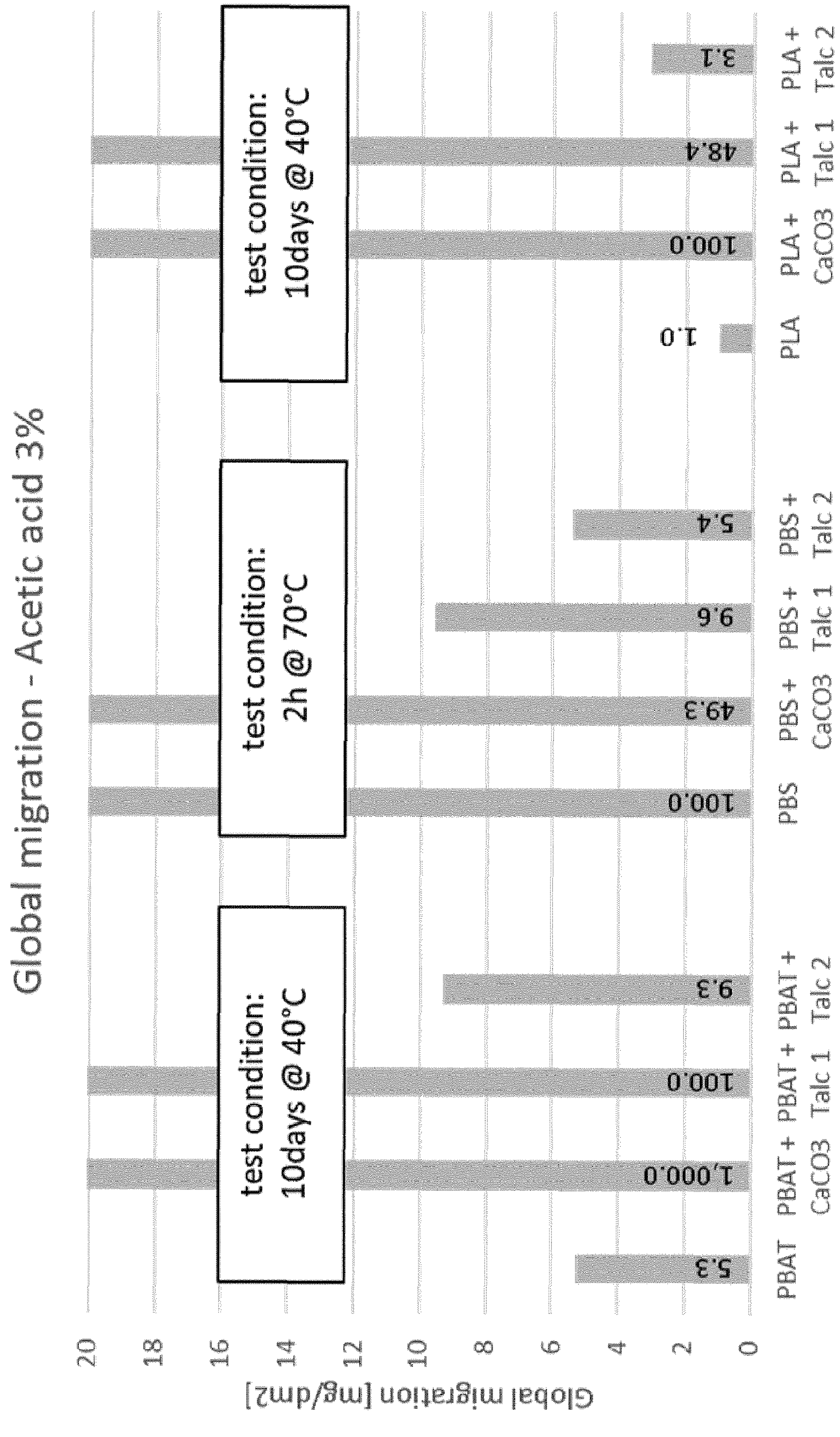
Global migration - Acetic acid 3%
Global migration [mg/dm2]
0
2
4
6
8
10
12
14
16
18
20
test condition:
10days @ 40°C
test condition:
2h @ 70°C
test condition:
10days @ 40°C
5.3
1,000.0
100.0
9.3
100.0
49.3
9.6
5.4
1.0
100.0
48.4
3.1
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2

Figure 11

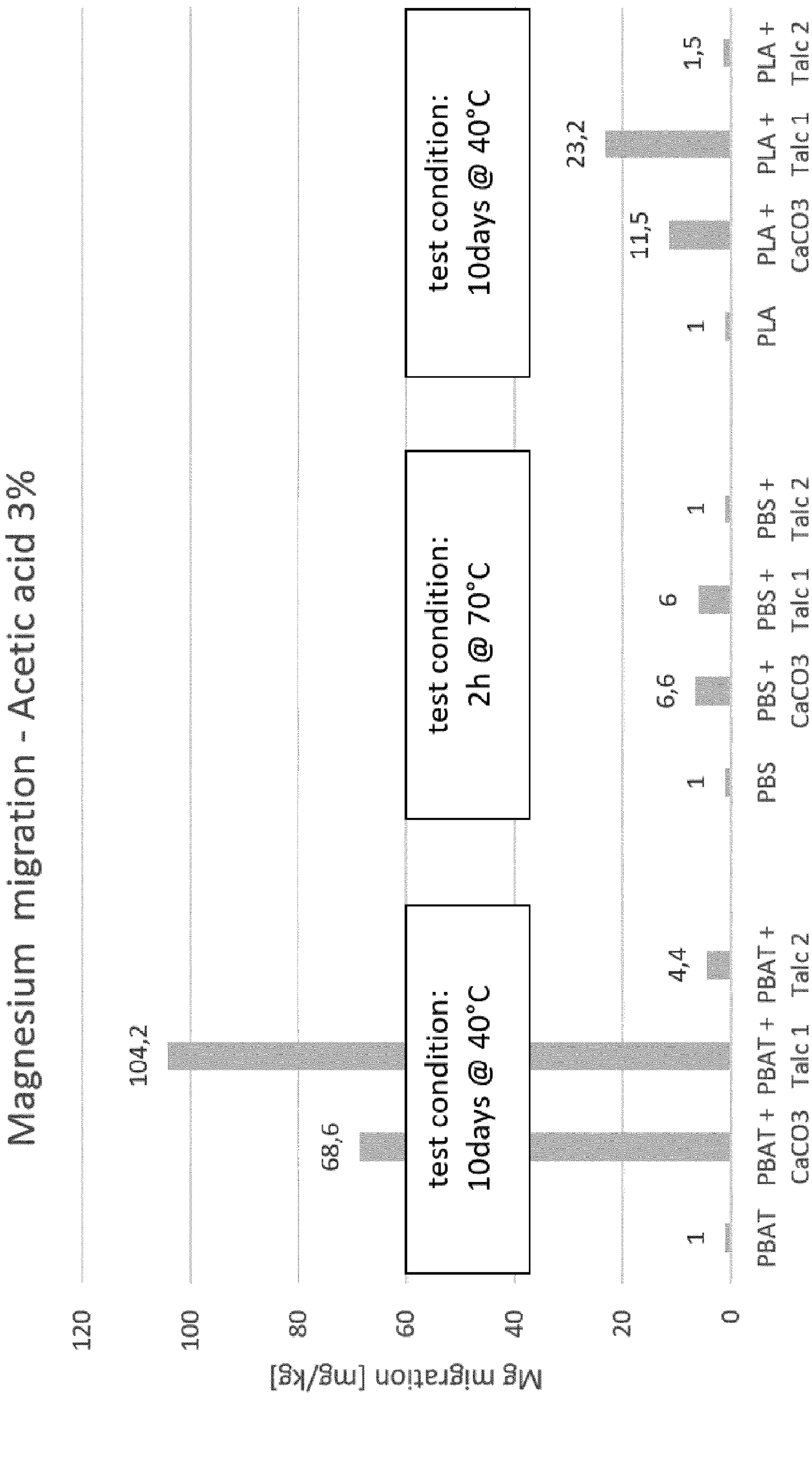
Magnesium migration - Acetic acid 3%
Mg migration [mg/kg]
0
20
40
60
80
100
120
test condition:
10days @ 40°C
test condition:
2h @ 70°C
test condition:
10days @ 40°C
1
68,6
104,2
4,4
1
6,6
6
1
1
11,5
23,2
1,5
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2

Figure 12

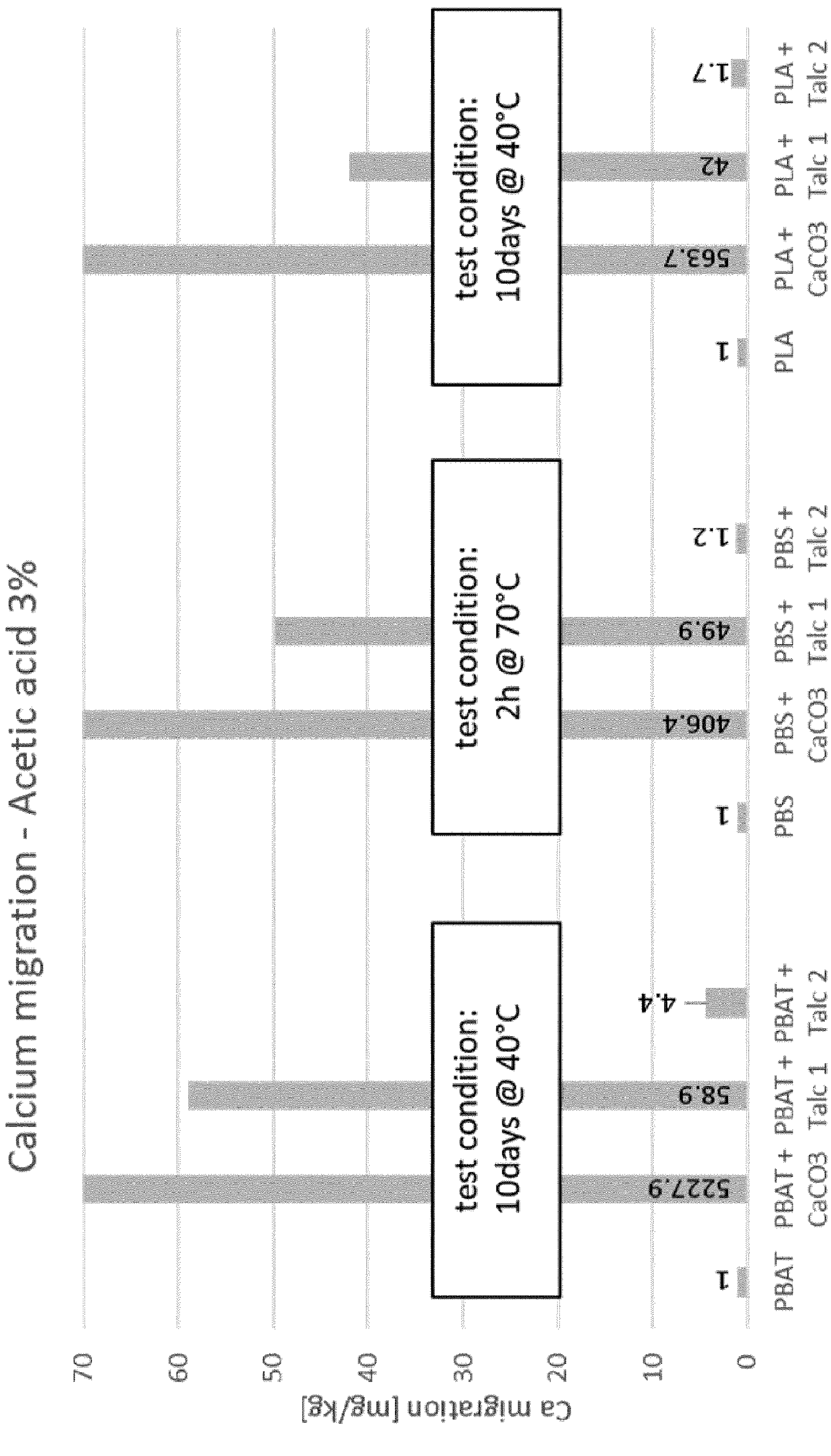

Calcium migration - Acetic acid 3%
Ca migration [mg/kg]
0
10
20
30
40
50
60
70
1
5227.9
58.9
4.4
1
406.4
49.9
1.2
1
563.7
42
1.7
test condition: 10days @ 40°C
test condition: 2h @ 70°C
test condition: 10days @ 40°C
PBAT
PBAT + CaCO3
PBAT + Talc 1
PBAT + Talc 2
PBS
PBS + CaCO3
PBS + Talc 1
PBS + Talc 2
PLA
PLA + CaCO3
PLA + Talc 1
PLA + Talc 2

Figure 13

| MIGRATION TESTS: Acetic acid 3% v/v | | | | | | | | | | | | | |
|---|---|---|---|---|---|---|---|---|---|---|---|---|---|
| *test conditions: contact time and temperature* | | 2h @ 70° | | | | 10gg @ 40° | | | | 10gg @ 40° | | | |
| *Base polymer* | | **PBS** | | | | **PBAT** | | | | **PLA** | | | |
| *Mineral filler* | | none | CaCO3 | Talc 1 | Talc 2 | none | CaCO3 | Talc 1 | Talc 2 | none | CaCO3 | Talc 1 | Talc 2 |
| Global migration | mg/dm^2 | >100 | 49.3 | 9.6 | 5.4 | 5.3 | >1000 | >100 | 9.3 | <1 | >100 | 48.4 | 3.1 |
| Mg | mg/kg | <1 | 6.6 | 6 | <1 | <1 | 68.6 | 104.2 | 4.4 | <1 | 11.5 | 23.2 | 1.5 |
| Ca | mg/kg | <1 | 406.4 | 49.9 | 1.2 | <1 | 5227.9 | 58.9 | 4.4 | <1 | 563.7 | 42 | 1.7 |

Figure 14

| MIGRATION TESTS: Acetic acid 3% v/v | | | | | | | | | | | | | |
|---|---|---|---|---|---|---|---|---|---|---|---|---|---|
| test conditions: contact time and temperature | | 2h @ 70° | | | | 10gg @ 40° | | | | 10gg @ 40° | | | |
| Base polymer | | PBS | | | | PBAT | | | | PLA | | | |
| Mineral filler | | none | CaCO3 | Talc 1 | Talc 2 | none | CaCO3 | Talc 1 | Talc 2 | none | CaCO3 | Talc 1 | Talc 2 |
| Ba | mg/kg | <0.02 | <0.02 | <0.02 | <0.02 | <0.02 | <0.02 | <0.02 | <0.02 | <0.02 | <0.02 | <0.02 | <0.02 |
| Co | mg/kg | <0.02 | <0.02 | <0.02 | <0.02 | <0.02 | <0.02 | <0.02 | <0.02 | <0.02 | <0.02 | <0.02 | <0.02 |
| Mn | mg/kg | <0.02 | <0.02 | <0.02 | <0.02 | <0.02 | <0.02 | <0.02 | <0.02 | <0.02 | <0.02 | <0.02 | <0.02 |
| Zn | mg/kg | <1 | <1 | <1 | <1 | <1 | <1 | <1 | <1 | <1 | <1 | <1 | <1 |
| Cu | mg/kg | <1 | <1 | <1 | <1 | <1 | <1 | <1 | <1 | <1 | <1 | <1 | <1 |
| Fe | mg/kg | <1 | <1 | <1 | <1 | <1 | <1 | <1 | <1 | <1 | <1 | <1 | <1 |
| Li | mg/kg | <0.02 | <0.02 | <0.02 | <0.02 | <0.02 | <0.02 | <0.02 | <0.02 | <0.02 | <0.02 | <0.02 | <0.02 |
| Al | mg/kg | <0.5 | <0.5 | <0.5 | <0.5 | <0.5 | <0.5 | <0.5 | <0.5 | <0.5 | <0.5 | <0.5 | <0.5 |
| Ni | mg/kg | <0.01 | <0.01 | <0.01 | <0.01 | <0.01 | <0.01 | <0.01 | <0.01 | <0.01 | <0.01 | <0.01 | <0.01 |
| Sb | mg/kg | <0.02 | <0.02 | <0.02 | <0.02 | <0.02 | <0.02 | <0.02 | <0.02 | <0.02 | <0.02 | <0.02 | <0.02 |
| Hg | mg/kg | <0.01 | <0.01 | <0.01 | <0.01 | <0.01 | <0.01 | <0.01 | <0.01 | <0.01 | <0.01 | <0.01 | <0.01 |
| As | mg/kg | <0.01 | <0.01 | <0.01 | <0.01 | <0.01 | <0.01 | <0.01 | <0.01 | <0.01 | <0.01 | <0.01 | <0.01 |
| Cr | mg/kg | <0.01 | <0.01 | <0.01 | <0.01 | <0.01 | <0.01 | <0.01 | <0.01 | <0.01 | <0.01 | <0.01 | <0.01 |
| Pb | mg/kg | 0.013 | <0.01 | <0.01 | <0.01 | <0.01 | <0.01 | <0.01 | <0.01 | <0.01 | <0.01 | <0.01 | <0.01 |
| Cd | mg/kg | <0.002 | <0.002 | <0.002 | <0.002 | <0.002 | <0.002 | <0.002 | <0.002 | <0.002 | <0.002 | <0.002 | <0.002 |

Europäisches Patentamt
European Patent Office
Office européen des brevets

# EUROPEAN SEARCH REPORT

Application Number
EP 22 15 7035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/228885 A1 (IMERTECH SAS [FR]) 18 November 2021 (2021-11-18)<br>* pages 1-45 *<br>* examples 1-14 *<br>* tables 1-18 *<br>* figures 1-6 *<br>----- | 1-14 | INV.<br>C09C1/42<br>C09C3/10<br>C08K3/34<br>B32B27/20 |
| X | WYPYCH ET AL: "Fillers - Origin, chemical composition, properties, and morphology", HANDBOOK OF FILLERS, TORONTO : CP, CHEMTEC PUBLISHING, CA, PAGE(S) 13 - 266<br>,<br>1 January 2016 (2016-01-01), XP009535853, ISBN: 978-1-895198-91-1<br>Retrieved from the Internet:<br>URL:https://www.sciencedirect.com/topics/engineering/fumed-silica<br>[retrieved on 2021-09-09]<br>* pages 218-221 *<br>----- | 1-15 | |
| X | US 2018/037735 A1 (KOCHESFAHANI SAIED [US] ET AL) 8 February 2018 (2018-02-08)<br>* paragraphs [0006] - [0051] *<br>----- | 1-9,13, 14 | TECHNICAL FIELDS SEARCHED (IPC)<br>C09C<br>C08K<br>B32B |
| X | US 2011/097255 A1 (SCHOELKOPF JOACHIM [CH] ET AL) 28 April 2011 (2011-04-28)<br>* paragraphs [0011] - [0128] *<br>* tables 1-9 *<br>----- | 1-14 | |

The present search report has been drawn up for all claims

1

| Place of search | Date of completion of the search | Examiner |
|---|---|---|
| The Hague | 13 July 2022 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 15 7035

This annex lists the patent family members relating to the patent documents cited in the above-mentioned European search report. The members are as contained in the European Patent Office EDP file on
The European Patent Office is in no way liable for these particulars which are merely given for the purpose of information.

13-07-2022

| Patent document cited in search report | Publication date | Patent family member(s) | Publication date |
|---|---|---|---|
| WO 2021228885 A1 | 18-11-2021 | NONE | |
| US 2018037735 A1 | 08-02-2018 | BR 112017016276 A2 | 27-03-2018 |
| | | CN 107531976 A | 02-01-2018 |
| | | EP 3250639 A1 | 06-12-2017 |
| | | JP 6710223 B2 | 17-06-2020 |
| | | JP 2018505292 A | 22-02-2018 |
| | | KR 20170140159 A | 20-12-2017 |
| | | US 2018037735 A1 | 08-02-2018 |
| | | WO 2016123526 A1 | 04-08-2016 |
| US 2011097255 A1 | 28-04-2011 | AU 2008250008 A1 | 20-11-2008 |
| | | CN 101678246 A | 24-03-2010 |
| | | EP 1992393 A1 | 19-11-2008 |
| | | EP 2146793 A1 | 27-01-2010 |
| | | ES 2387003 T3 | 11-09-2012 |
| | | MY 149137 A | 15-07-2013 |
| | | US 2011097255 A1 | 28-04-2011 |
| | | WO 2008138963 A1 | 20-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- AN XRD MORPHOLOGY INDEX FOR TALCS:THE EFFECT OF PARTICLE SIZE AND MORPHOLOGY ON THE SPECIFIC SURFACE AREA. **HOLLAND, MURTAGH.** Advances in X-ray Analysis. JCPDS-International Centre for Diffraction Data, 2000, vol. 42, 421-428
- **G. BAUDET ; J. P. RONA.** *Ind. Min. Mines et Carr. Les techn.,* June 1990, 55-61